# EUROPÄISCHE PATENTANMELDUNG

(11) **EP 4 644 451 A1**
(43) Veröffentlichungstag der Anmeldung: **05.11.2025**
(21) Anmeldenummer: 24173176.9
(22) Anmeldetag: 29.04.2024
(51) Int. Cl.: C08G 18/48, C08G 18/76, C08G 18/16, C08G 18/18, C08G 18/24, C08G 101/00

(54) **VERBINDUNG ENTHALTEND AROMATISCHE HYDROXYLGRUPPEN UND DEREN HERSTELLUNGSVERFAHREN**

(71) Anmelder: Covestro Deutschland AG, 51373 Leverkusen (DE)
(72) Erfinder: Levi, Lucilla, 40591 Düsseldorf (DE); Hofmann, Joerg, 47800 Krefeld (DE); Lorenz, Klaus, 41539 Dormagen (DE); Werda, Stefan, 41363 Jüchen (DE); Leven, Matthias, 51069 Köln (DE); Raps, Daniel, 51067 Köln (DE); Laemmerhold, Kai, 51519 Odenthal (DE); Mueller, Christian, 50825 Köln (DE)
(74) Vertreter: Levpat

(57) **Zusammenfassung**

Die vorliegende Erfindung betrifft eine Verbindung enthaltend aromatische Hydroxylgruppen und deren Herstellungsverfahren. Weiterhin erstreckt sich die Erfindung auf ein Verfahren zur Herstellung eines Polyurethans umfassend die Umsetzung der Verbindung enthaltend aromatische Hydroxylgruppen, die daraus resultierenden Polyurethane sowie eine thermische Behandlung dieses Polyurethans.

## Beschreibung

Die vorliegende Erfindung betrifft eine Verbindung enthaltend aromatische Hydroxylgruppen und deren Herstellungsverfahren. Weiterhin erstreckt sich die Erfindung auf ein Verfahren zur Herstellung eines Polyurethans umfassend die Umsetzung der Verbindung enthaltend aromatische Hydroxylgruppen, die daraus resultierenden Polyurethane sowie eine thermische Behandlung dieses Polyurethans.

Im Stand der Technik sind verschiedene Methoden zur Herstellung von Polyurethanen, wie beispielsweise Polyurethanschäumen oder kompakten Polyurethanen vorbeschrieben, wobei in zunehmendem Maße die stoffliche und energetische Verwertung, beispielsweise die stoffliche Wiederverwendung (Recycling) von Polyurethanen an Relevanz gewinnt. Herausfordernd hierbei ist die thermische und chemische Stabilität der Polyurethanbindung (PU-Bindung), wobei die PU-Bindung typischerweise durch Additionsreaktion einer Polyisocyanatkomponente enthaltend zwei oder mehr Isocyanatgruppen mit einer Polyolkomponente enthaltend zwei oder mehrere aliphatische Hydroxylgruppen (OH-Gruppen) gebildet wird. Aktuell werden Pyrolyse- oder Chemolyseverfahren für die stoffliche PU-Wiederverwendung beschrieben, wobei die Bindungsspaltung bei der Pyrolysereaktion bei meist erhöhter Temperatur von deutlich oberhalb 200 °C infolge des meist radikalischen Reaktionsmechanismus unspezifisch ist und Fragmente resultieren, welche nicht bzw. mindestens nicht direkt in der PU-Herstellung wieder eingesetzt werden können. Diese undefinierte Fragmentierung kann durch Chemolyseverfahren, beispielsweise durch Verwendung von Wasser (Hydrolyse) und/oder Alkoholen wie Glycolen (Glycolyse) vermieden werden, wobei typischerweise eine Carbamat- und eine Polyolphase resultieren. Nachteilig an Chemolyseverfahren ist die Verwendung von Wasser bzw. den Alkoholen im Überschuss, da diese Reaktanden bzw. ggf. zusätzliche Lösungsmittel beispielsweise durch nachgeschaltete energieintensive destillative Prozessschritte mit erhöhtem prozess- und zeittechnischem Aufwand abgetrennt werden müssen. Auch muss vor einer möglichen PU-Wiederverwertung die gebildete Polyolphase von der Carbamatphase abgetrennt und aufgereinigt werden bzw. das gebildete Carbamat in zusätzlichen, (sicherheits)technisch aufwendigen Verfahrensschritten zum Amin gespalten und durch Phosgenierung in die Isocyanatkomponente überführt werden.

Aufgabe der vorliegenden Anmeldung war es, Hydroxylgruppen-enthaltende Verbindungen als Polyolkomponente für die Herstellung eines Polyurethans durch Umsetzung mit einer Polyisocyanatkomponente unter Ausbildung von Urethanbindungen bereitzustellen, die eine gegenüber dem Stand der Technik verbesserte Wiederverwendbarkeit des Polyurethans ermöglichen. Dies kann beispielsweise durch eine möglichst reversible Spaltung und erneute Verknüpfung mindestens eines Teils der Urethanbindungen realisiert werden, womit die Wiederverwendung des Polyurethans ermöglicht wird, ohne die Polyurethan-Gesamtstruktur gänzlich zu spalten, wie dies in aus dem Stand der Technik bekannten Chemolyseverfahren durch Umsetzung mit Alkoholen und/oder Wasser erfolgt. Somit können aufwändige Recyclierungsverfahren unter Einsatz verschiedener zusätzlicher Reaktanden bzw. Lösungsmittel und deren Abtrennung, beispielsweise durch Einsatz energieaufwändiger, thermischer und/oder extraktiver Abtrennungsmethoden vermieden werden. Es ist erfindungsgemäß ebenfalls angestrebt, dass die mithilfe der neuen Hydroxylgruppen-enthaltenden Verbindungen als Polyolkomponente hergestellten Polyurethane, wie beispielsweise Polyurethanschäume oder kompakte Polyurethane, gegenüber Polyurethanen, welche mit bekannten Polyolkomponenten hergestellt werden, mindestens vergleichbare Eigenschaftsprofile, wie beispielsweise mechanische Eigenschaften, aufweisen. Hierbei ist es im Speziellen vorteilhaft und ebenfalls Ziel der Erfindung, die Hydroxylgruppen-enthaltende Verbindung als Polyolkomponente durch eine einfache aber bevorzugt quantitative Reaktion aus einer aus der Polyurethanchemie allgemein bekannten Polyolkomponente herzustellen, so dass man sich der Vielzahl bereits bekannter Polyolkomponenten bedienen und diese durch einfache chemische Modifikationen in eine Vielzahl erfindungsgemäßer Hydroxylgruppenhaltiger Verbindungen überführen kann. Außerdem müssen keine Reagenzienüberschüsse verwendet werden, so dass keine zusätzlichen, zeitaufwändigen Abtrennungsschritte für nicht umgesetzte Ausgangsstoffe notwendig werden.

Weiterhin ist es in einer Ausführungsform der vorliegenden Erfindung vorteilhaft, wenn die Hydroxylgruppen-enthaltende Verbindung auch die Polyurethanbildungsreaktion katalysiert, mindestens aber keine potenziell die Polyurethanbildungsreaktion beeinträchtigenden Elemente, wie beispielsweise Schwefel, enthält.

Überraschenderweise wurde nun gefunden, dass eine Hydroxylgruppen-enthaltende Verbindung (A) enthaltend eine an eine aromatische Einheit Ar¹ oder Ar² gebundene Hydroxylgruppe, wobei die Hydroxylgruppen-enthaltende Verbindung (A) mindestens eine, bevorzugt mindestens zwei Struktureinheit(en) der nachfolgenden Formel (I) oder der Formel (II) aufweist:

R¹-O-C(=O)-R²-Ar¹-OH (I)

R³-O-C(=O)-Ar²-OH (II)

worin
- R¹, R³: mindestens eine Oxyalkyleneinheit,
- R²: eine gesättigte Kohlenwasserstoffeinheit mit mindestens einem Kohlenstoffatom oder eine ungesättigte Kohlenwasserstoffeinheit mit mindestens zwei Kohlenstoffatomen,
- Ar¹: eine aromatische Einheit, bevorzugt eine Phenylen- oder eine Naphthylen-Einheit, besonders bevorzugt eine Phenylen-Einheit, und
- Ar²: eine Phenylen-Einheit bezeichnen,
wobei in der Struktureinheit der Formel (I) mindestens eine, bevorzugt jede, zu der aromatischen Hydroxylgruppe ortho-ständige Position der aromatischen Einheit Ar¹ ein Wasserstoffatom trägt, und wobei in der Struktureinheit der Formel (II) die aromatische Hydroxylgruppe in ortho-ständiger Position oder in meta-ständiger Position, bevorzugt in meta-ständiger Position zur R³-O-C(=O)-Einheit steht, wobei bevorzugt eine, insbesondere jede vorhandene, zu der aromatischen Hydroxylgruppe ortho-ständige Position der aromatischen Einheit Ar² ein Wasserstoffatom trägt, die oben formulierte Aufgabe löst.

Erfindungsgemäß ist unter einer Phenylen-Einheit (Phenylengruppe) gemäß des allgemeinen Fachwissens eine Atomgruppe zu verstehen, welche zweifach gebunden ist. Im Falle einer unsubstituierten Phenylen-Einheit resultiert eine -C₆H₄- Atomgruppe, welche einerseits an die Hydroxylgruppe bzw. andererseits an -R²- (Formel I) bzw. R³-O-C(=O)- (Formel II) gebunden ist. Ein analoger Zusammenhang ergibt sich für die Naphthylen-Einheit, wobei im Falle einer unsubstituierten Naphthylen-Einheit eine -C₁₀H₆- Atomgruppe resultiert, welche einerseits an die Hydroxylgruppe bzw. andererseits an -R²- (Formel I) gebunden ist.

Die Erfindung wird nachfolgend detailliert ausgeführt, wobei die erfindungsgemäßen Ausführungsformen beliebig miteinander kombiniert werden können, insofern sich aus dem technischen Kontext nicht das Gegenteil ergibt.

Erfindungsgemäß können R¹, R³ mindestens eine Ethereinheit, bevorzugt mindestens eine Polyethereinheit, mindestens eine Carbonateinheit und/oder mindestens eine Estereinheit, bevorzugt eine Polyestereinheit sein, wobei die mindestens eine Ethereinheit, bevorzugt die Polyethereinheit, besonders bevorzugt mindestens eine Oxypropyleneinheit und/oder mindestens eine Oxyethyleneinheit ist.

In einer Ausführungsform der Erfindung bezeichnen
- R¹, R³: mindestens eine Ethereinheit, bevorzugt eine Polyethereinheit, besonders bevorzugt mindestens eine Oxypropyleneinheit und/oder mindestens eine Oxyethyleneinheit,
- R²: CH₂ oder CH₂-CH₂, bevorzugt CH₂, und
- Ar¹, Ar²: eine substituierte oder unsubstituierte Phenyleinheit, bevorzugt eine unsubstituierte Phenyleinheit
der Hydroxylgruppen-enthaltenden Verbindung (A).

In einer Ausführungsform der Erfindung enthält die Hydroxylgruppen-enthaltende Verbindung (A) in R¹ und/oder R³ mindestens eine Ethereinheit, bevorzugt eine Polyethereinheit und besonders bevorzugt mindestens eine Oxypropyleneinheit und/oder mindestens eine Oxyethyleneinheit. Hierbei kann die mindestens eine Oxyethylen- und/oder mindestens eine Oxypropyleneinheit durch Ringöffnung eines Alkylenoxids, bevorzugt Ethylenoxid und/oder Propylenoxid an eine H-funktionelle Starterverbindung gebildet werden.

In einer bevorzugten Ausführungsform der Erfindung enthält die Hydroxylgruppen-enthaltende Verbindung (A) mindestens 3 direkt aufeinander folgende Ethereinheiten, wobei es sich hierbei bevorzugt um mindestens 3 direkt aufeinander folgende Oxyethylen-, und / oder mindestens 3 direkt aufeinander folgende Oxypropyleneinheiten handelt oder die mindestens 3 Oxyalkyleneinheiten Mischungen aus Oxyethylen- und Oxypropyleneinheiten beinhalten.

In einer weiteren bevorzugten Ausführungsform der Erfindung enthält die Hydroxylgruppen-enthaltende Verbindung (A) höchstens 400 direkt aufeinander folgende Ethereinheiten, bevorzugt höchstens 200 direkt aufeinander folgende Oxyethylen- und/oder höchstens 400 direkt aufeinander folgende Oxypropyleneinheiten.

In einer Ausführungsform der Erfindung beträgt die OH-Zahl der Hydroxylgruppen-enthaltenden Verbindung (A) von 5 mg KOH/g bis 500 mg KOH/g, besonders bevorzugt von 10 mg KOH/g bis 500 mg KOH/g.

In einer Ausführungsform der Erfindung beträgt der berechnete Anteil der an die aromatische Einheit Ar¹ oder Ar² gebundenen Hydroxylgruppen von 20 mol-% bis 100 mol-%, bevorzugt von 25 mol-% bis 100 mol-%, besonders bevorzugt von 30 mol-% bis 100 mol-%, bezogen auf die Summe aller freien Hydroxylgruppen der Hydroxylgruppen-enthaltenden Verbindung (A). Neben der Berechnung des Anteils der aromatischen Hydroxylgruppen kann deren Anteil auch experimentell durch eine OH-Zahl-Bestimmung i.V. mit ¹H- und ¹³C-NMR-Spektroskopie ermittelt werden, wie dies exemplarisch in Beispiel 2 des Experimentalteils erfolgt ist. Hierbei weisen die experimentell ermittelten Werte eine sehr gute Übereinstimmung mit den berechneten Anteilen auf.

In einer Ausführungsform der Erfindung weist die Hydroxylgruppen-enthaltende Verbindung (A) eine berechnete Hydroxylgruppen-Funktionalität von 1 bis 8, bevorzugt von 2 bis 6 und besonders bevorzugt von 2 bis 4 auf.

Gegenstand der Erfindung ist auch ein Verfahren zur Herstellung der erfindungsgemäßen Hydroxylgruppen-enthaltenden Verbindung (A) umfassend die Umsetzung einer Komponente (B) enthaltend eine oder mehrere aliphatische Hydroxylgruppe(n) mit einer Carbonsäure (C) enthaltend eine aromatische Hydroxylgruppe optional in Gegenwart eines Katalysators (D), wobei die Carbonsäure (C) eine Struktur der nachfolgenden Formel (III) oder der Formel (IV) aufweist:

H-O-C(=O)-R²-Ar¹-OH (III)

H-O-C(=O)-Ar²-OH (IV)

worin
- R²: eine gesättigte Kohlenwasserstoffeinheit mit mindestens einem Kohlenstoffatom oder eine ungesättigte Kohlenwasserstoffeinheit mit mindestens zwei Kohlenstoffatomen,
- Ar¹: eine aromatische Einheit, bevorzugt eine Phenylen- oder eine Naphthylen-Einheit, besonders bevorzugt eine Phenylen-Einheit, und
- Ar²: eine Phenylen-Einheit
bezeichnen,
wobei in der Struktureinheit der Formel (III) mindestens eine, bevorzugt jede, zu der aromatischen Hydroxylgruppe ortho-ständige Position der aromatischen Einheit Ar¹ ein Wasserstoffatom trägt,
und wobei in der Struktureinheit der Formel (IV) die aromatische Hydroxylgruppe in ortho-ständiger Position oder in meta-ständiger Position, bevorzugt in meta-ständiger Position zur R³-O-C(=O)-Einheit steht, wobei bevorzugt eine, insbesondere jede vorhandene, zu der aromatischen Hydroxylgruppe ortho-ständige Position der aromatischen Einheit Ar² ein Wasserstoffatom trägt.

Erfindungsgemäß sind unter aliphatischen Hydroxylgruppen in Übereinstimmung mit dem allgemeinen Fachwissen solche Hydroxylgruppen zu verstehen, welche direkt an Alkylengruppen, wie beispielsweise CH₂-Gruppen gebunden sind. Somit sind arylische-Hydroxylgruppen ausgeschlossen.

In einer Ausführungsform der Erfindung sind die aliphatischen Hydroxylgruppen der Komponente (B) primäre und/oder sekundäre Hydroxylgruppen.

In einer Ausführungsform der Erfindung ist die Komponente (B) erhältlich durch Umsetzung einer H-funktionellen Starterverbindung (E) mit einem Alkylenoxid (F) in Gegenwart eines Katalysators (G). In einer bevorzugten Ausführungsform der Erfindung wird die Komponente (B) erhalten durch Umsetzung einer H-funktionellen Starterverbindung (E) mit einem Alkylenoxid (F) in Gegenwart eines Katalysators (G).

In einer Ausführungsform der Erfindung ist die Carbonsäure (C) ausgewählt aus 4-Hydroxyphenylessigsäure, 3-Hydroxybenzoesäure, 4-Hydroxyzimtsäure, 3-(4-Hydroxyphenyl)propionsäure oder einer Mischung aus zwei oder mehr der vorgenannten Carbonsäuren, wobei 4-Hydroxyphenylessigsäure, 3-Hydroxybenzoesäure oder ein Gemisch beider bevorzugt und wobei 4-Hydroxyphenylessigsäure besonders bevorzugt ist.

Erfindungsgemäß können Katalysatoren (D) der Umsetzung der Komponente (B) enthaltend eine oder mehrere aliphatische Hydroxylgruppe(n) mit einer Carbonsäure (C) enthaltend eine aromatische Hydroxylgruppe zugesetzt werden, wobei eine entsprechende Veresterung der Carbonsäuregruppe der Carbonsäure (C) mit der Komponente (B) enthaltend eine oder mehrere aliphatische Hydroxylgruppe(n) stattfindet.

Hierbei können Veresterungskatalysatoren eingesetzt werden, wobei beispielhaft Zinn(II)-Salze, wie z.B. Zinndichlorid, Zinndichlorid-Dihydrat, Zinn(II)-2-ethylhexanoat, Dibutylzinndilaurat, Titanalkoxylate, wie z.B. Titantetrabutanolat, Tetraisopropyltitanat, Bismuth(III)-neodecanoat, Zink(II)-acetat, Mangan(II)-acetat oder Protonsäuren, wie z.B. p-Toluolsulfonsäure genannt seien. Weiterhin können die Veresterungen auch durch Enzyme, wie z.B. Esterasen und/oder Lipasen, katalysiert werden.

In einer Ausführungsform der Erfindung ist der Katalysator (D) eine oder mehrere Verbindungen und wird ausgewählt aus der Gruppe bestehend aus Zinndichlorid, Zinndichlorid-Dihydrat, Zinn(II)-2-ethylhexanoat, Dibutylzinndilaurat, Titantetrabutanolat, Tetraisopropyltitanat, Bismuth(III)-neodecanoat, Zink(II)-acetat, Mangan(II)-acetat und p-Toluolsulfonsäure, bevorzugt p-Toluolsulfonsäure.

Als geeignete H-funktionelle Starterverbindungen (E), auch Starter genannt, können Verbindungen mit für die Alkoxylierung aktiven H-Atomen, sogenannten "Zerewitinoff-aktiven" Wasserstoffatomen, eingesetzt werden. Ein an N, O oder S gebundener Wasserstoff wird als Zerewitinoff-aktiver Wasserstoff bezeichnet, wenn er nach einem von Zerewitinoff aufgefundenen Verfahren durch Umsetzung mit Methylmagnesiumjodid Methan liefert. Typische Beispiele für Verbindungen mit Zerewitinoff-aktivem Wasserstoff sind Verbindungen, die Carboxyl-, Hydroxyl- oder Aminogruppen als funktionelle Gruppen enthalten. Bevorzugt enthält die H-funktionelle Starterverbindung (E) im erfindungsgemäßen Verfahren keine schwefelhaltigen funktionellen Gruppen, im Speziellen keine Thiolgruppen.

Für die Alkoxylierung besonderes geeignete Gruppen mit aktiven H-Atomen sind -OH und -NH₂, ganz besonders bevorzugt ist -OH.

Als H-funktionelle Starterverbindung (E) können beispielsweise eine oder mehrere Verbindungen ausgewählt werden aus der Gruppe umfassend ein- oder mehrwertige Alkohole, mehrwertige Amine, Aminoalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z.B. sogenannte Jeffamine^{®} von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF^{®} der BASF, wie z.B. PolyTHF^{®} 250, 650S, 1000, 1000S, 1400, 1800, 2000), Polytetrahydrofuranamine (BASF Produkt Polytetrahydrofuranamin 1700), Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance^{®} (Fa. BASF AG), Merginol^{®}-Typen (Fa. Hobum Oleochemicals GmbH), Sovermol^{®}-Typen (Fa. Cognis Deutschland GmbH & Co. KG) und Soyol^{®}TM-Typen (Fa. USSC Co.).

In einer bevorzugten Ausführungsform des erfindungsgemäßen Verfahrens ist die H-funktionelle Starterverbindung (E) ein Polyol, bevorzugt ein mehrfunktioneller Alkohol, ein mehrfunktionelles Amin, ein Polyetherpolyol oder ein Polyetheresterpolyol, besonders bevorzugt ein Polyetherpolyol und/oder ein mehrfunktioneller Alkohol.

Als H-funktionelle Starterverbindungen (E) ebenfalls geeignet sind beispielsweise zweiwertige Alkohole wie Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)-cyclohexan), Triethylenglykol, Tetraethylenglykol, Polyethylenglykole, Dipropylenglykol, Tripropylenglykol, Polypropylenglykole, Dibutylenglykol und Polybutylenglykole, dreiwertige Alkohole wie beispielweise Trimethylolpropan, Glycerin, Trishydroxyethylisocyanurat, Rizinusöl und Triethanolamin, vierwertige Alkohole wie beispielsweise Pentaerythrit, Polyalkohole wie beispielweise Sorbit, Hexit, Saccharose, Stärke, Stärkehydrolysate (Maltodextrin), Cyclodextrine, Cellulose, Cellulosehydrolysate, hydroxyfunktionalisierte Fette und Öle. Auch Wasser ist als zweiwertige H-funktionelle Starterverbindung (E) zur Durchführung des erfindungsgemäßen Verfahrens geeignet.

Als H-funktionelle Starterverbindungen (E) geeignet sind auch Amine wie beispielsweise Ammoniak, Ethanolamin, Diethanolamin, Isopropanolamin, Diisopropanolamin, Ethylendiamin, Pentamethylendiamin, Hexamethylendiamin, Anilin, die Isomere des Toluidins, die Isomere des Diaminotoluols, die Isomere des Diaminodiphenylmethans sowie bei der Kondensation von Anilin mit Formaldehyd zu Diaminodiphenylmethan anfallende höherkernige Produkte.

Die H-funktionellen Starterverbindungen (E) können auch aus der Substanzklasse der Polyetherpolyole ausgewählt sein, insbesondere aus solchen mit einer zahlenmittleren Molmasse (Mn) im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxid-einheiten sind beispielsweise die Desmophen^{®}-, Acclaim^{®}-, Arcol^{®}-, Baycoll^{®}-, Bayfill^{®}-, Bayflex^{®}- Baygal^{®}-, PET^{®}- und Polyether-Polyole der Covestro AG (wie z. B. Desmophen^{®} 3600Z, Desmophen^{®} 1900U, Acclaim^{®} Polyol 2200, Acclaim^{®} Polyol 4000I, Arcol^{®} Polyol 1004, Arcol^{®} Polyol 1010, Arcol^{®} Polyol 1030, Arcol^{®} Polyol 1070, Baycoll^{®} BD 1110, Bayfill^{®} VPPU 0789, Baygal^{®} K55, PET^{®} 1004, Polyether^{®} S 180). Weitere geeignete homo-Polyethylenoxide sind beispielsweise die Pluriol^{®} E-Marken der BASF SE, geeignete homo-Polypropylenoxide sind beispielsweise die Pluriol^{®} P-Marken der BASF SE, geeignete gemischte Copolymere aus Ethylenoxid und Propylenoxid sind beispielsweise die Pluronic^{®} PE oder Pluriol^{®} RPE-Marken der BASF SE.

Die H-funktionellen Starterverbindungen (E) weisen im Allgemeinen eine OH-Funktionalität (d. h. eine Anzahl an für die Polymerisation aktiven H-Atomen pro Molekül) von 1 bis 8, bevorzugt von 2 bis 6 und besonders bevorzugt von 2 bis 4 auf. Die H-funktionellen Starterverbindungen (E) werden entweder einzeln oder als Gemisch aus mindestens zwei H-funktionellen Starterverbindungen (E) eingesetzt.

In einer bevorzugten Ausführungsform des erfindungsgemäßen Verfahrens weisen die H-funktionellen Starterverbindungen (E) Hydroxylzahlen von 150 mg KOH/g bis 6230 mg KOH/g, bevorzugt von 200 mg KOH/g bis 1850 mg KOH/g auf, wobei die Hydroxylzahl mittels der im Experimentalteil offenbarten Methode bestimmt wurde.

In einer Ausführungsform der Erfindung ist die H-funktionelle Starterverbindung (E) ein Amin und/oder ein Alkohol, bevorzugt handelt es sich um einen Alkohol.

In einer Ausführungsform der Erfindung ist die H-funktionelle Starterverbindung (E) ein Alkohol, und der Alkohol ist eine oder mehrere Verbindungen und wird ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, ein difunktionelles Polyetherpolyol und ein trifunktionelles Polyetherpolyol, bevorzugt ein difunktionelles Polyetherpolyol und ein trifunktionelle Polyetherpolyol. Hierbei kann das Polyetherpolyol einzeln oder als Gemisch eingesetzt werden.

Das im erfindungsgemäßen Verfahren eingesetzte mindestens eine Alkylenoxid (F) weist 2 bis 24 Kohlenstoffatome auf. Bei den Alkylenoxiden (F) mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C₁-C₂₄-Ester epoxidierter Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltriisopropoxysilan.

Im erfindungsgemäßen Verfahren werden als Alkylenoxid (F) bevorzugt Propylenoxid, Ethylenoxid oder ein Gemisch aus Ethylenoxid und Propylenoxid eingesetzt. Werden Gemische aus Ethylenoxid und Propylenoxid eingesetzt, weisen diese bevorzugt bis zu 75 Massen-% Ethylenoxid, besonders bevorzugt bis zu 50 Massen-% Ethylenoxid und ganz besonders bevorzugt bis zu 30 Massen-% Ethylenoxid, bezogen auf die Gesamtmasse des Gemisches aus Ethylenoxid und Propylenoxid, auf. Insbesondere werden ausschließlich Propylenoxid als Alkylenoxid (F) eingesetzt sowie Gemische aus Ethylenoxid und Propylenoxid mit bis zu 30 Massen-% Ethylenoxid, bezogen auf die Gesamtmasse des Gemisches aus Ethylenoxid und Propylenoxid als Alkylenoxid (F). Die Alkylenoxide (F) können dem Reaktor als Einzelkomponenten oder als Gemisch zugeführt werden. Es ist ebenfalls möglich, aber weniger bevorzugt, mehrere Alkylenoxide (F) dem Reaktor nacheinander zuzuführen, womit sich Polyoxyalkylenketten mit Blockstruktur realisieren lassen. Bei der Dosierung mehrerer Alkylenoxide (F) ist es zudem möglich, die Zusammensetzung des zugeführten Alkylenoxidstroms kontinuierlich oder instantan zu ändern.

In einer Ausführungsform der Erfindung ist der Katalysator (G) ein Doppelmetallcyanid (DMC)-Katalysator, ein Alkalimetallhydroxid, ein Erdalkalimetallhydroxid und/oder ein Amin, eine Lewis-Säure oder eine Brønsted-Säure, bevorzugt ein Doppelmetallcyanid (DMC)-Katalysator, ein Alkalimetallhydroxid, ein Erdalkalimetallhydroxid oder ein Amin.

Als Katalysator (G) geeignete Doppelmetallcyanid (DMC)-Katalysatoren sind im Prinzip aus dem Stand der Technik bekannt (siehe z.B. US-A 3 404 109, US-A 3829505, US-A 3941849 und US-A 5158922). DMC-Katalysatoren, die z.B. in US-A 5470813, EP-A 700949, EP-A 743093, EP-A 761708, WO 97/40086, WO 98/16310 und WO 00/47649 beschrieben sind, besitzen eine sehr hohe Aktivität in der Polymerisation von Alkylenoxiden und ermöglichen die Herstellung von Polyoxyalkylenpolyolen unter optimalen Bedingungen bei sehr geringen Katalysatorkonzentrationen (100 ppm oder weniger), so dass eine Abtrennung des Katalysators aus dem fertigen Produkt im Allgemeinen nicht mehr erforderlich ist. Ein typisches Beispiel sind die in EP-A 700949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch eine Polyoxyalkylenverbindung mit einem zahlenmittleren Molekulargewicht > als 500 g/mol enthalten. Es ist auch möglich, die in EP Anmeldenummer 10163170.3 offenbarten alkalischen DMC-Katalysatoren einzusetzen.

Zur Herstellung der Doppelmetallcyanid-Verbindung geeignete cyanidfreie Metallsalze besitzen bevorzugt die allgemeine Formel (V),

M(X)ₙ (V)

wobei
M ausgewählt ist aus den Metallkationen Zn²⁺, Fe²⁺, Ni²⁺, Mn²⁺, Co²⁺, Sr²⁺, Sn²⁺, Pb²⁺ und, Cu²⁺, bevorzugt ist M Zn²⁺, Fe²⁺, Co²⁺ oder Ni²⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Cyanat, Thiocyanat, Isocyanat, Isothiocyanat oder Nitrat ist, oder geeignete cyanidfreie Metallsalze besitzen die allgemeine Formel (VI),

Mᵣ(X)₃ (VI)

wobei
M ausgewählt ist aus den Metallkationen Fe³⁺, Al³⁺ und Cr³⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalate ist und
r ist 1, wenn X = Halogenid, Hydroxid, Cyanat, Thiocyanat, Isocyanat, Isothiocyanat, Carboxylat oder Nitrat ist,
oder geeignete cyanidfreie Metallsalze besitzen die allgemeine Formel (VII),

M(X)ₛ (VII)

wobei
M ausgewählt ist aus den Metallkationen Mo⁴⁺, V⁴⁺ und W⁴⁺
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Cyanat, Thiocyanat, Isocyanat, Isothiocyanat, Carboxylat oder Nitrat ist,
oder geeignete cyanidfreie Metallsalze besitzen die allgemeine Formel (VIII),

M(X)ₜ (VIII)

wobei
M ausgewählt ist aus den Metallkationen Mo⁶⁺ und W⁶⁺
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Cyanat, Thiocyanat, Isocyanat, Isothiocyanat, Carboxylat oder Nitrat ist,
Beispiele geeigneter cyanidfreier Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (IX)

(Y)ₐM'(CN)_{b}(A)_{c} (IX)

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) undNi(II),
Y ausgewählt ist aus einem oder mehreren Metallkationen der Gruppe bestehend aus Alkalimetall (d.h. Li⁺, Na⁺, K⁺, Rb⁺, Cs⁺) und Erdalkalimetall (d.h. Be²⁺, Ca²⁺, Mg²⁺, Sr²⁺, Ba²⁺),
A ausgewählt ist aus einem oder mehreren Anionen der Gruppe bestehend aus Halogeniden (d..h. Fluorid, Chlorid, Bromid, Iodid), Hydroxid, Sulfat, Carbonat, Cyanat, Thiocyanat, Isocyanat, Isothiocyanat, Carboxylat, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.
Beispiele geeigneter Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den erfindungsgemäßen DMC-Katalysatoren enthalten sind, sind Verbindungen der allgemeinen Formel (X)

Mₓ[M'ₓ,(CN)_{y}]_{z} (X)

,
worin M wie in Formel (V) bis (VIII) und
M' wie in Formel (IX) definiert ist, und
x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US-A 5158922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US-A 5158922 (siehe insbesondere Spalte 6, Zeilen 9 bis 65), US-A 3404109, US-A 3829505, US-A 3941849, EP-A 700949, EP-A 761708, JP-A 4145123, US-A 5470813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol, 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der DMC-Katalysatoren eine oder mehrere komplexbildende Komponente(n) aus den Verbindungsklassen der Polyoxyalkylenverbindungen, Polyester, Polycarbonate, Polyalkylenglykolsorbitanester, Polyalkylenglykolglycidylether, Polyacrylamid, Poly-(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz, (also mindestens ein molares Verhältnis von cyanidfreiem Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, so dass sich eine Suspension bildet, die die Doppelmetallcyanid-Verbindung (z.B. Zinkhexacyanocobaltat), Wasser, überschüssiges cyanidfreies Metallsalz, und den organischen Komplexliganden enthält. Der organische Komplexligand kann dabei in der wässrigen Lösung des cyanidfreien Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des cyanidfreien Metallsalzes und des Metallcyanidsalzes und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante zur Herstellung des DMC-Katalysators wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Massen-%, bezogen auf die Gesamtlösung.

Optional wird im dritten Schritt der wässrigen Waschlösung eine oder mehrere weitere komplexbildende Komponente(n), bevorzugt im Bereich zwischen 0,5 und 5 Massen-%, bezogen auf die Gesamtlösung, zugefügt.

Außerdem ist es vorteilhaft, den isolierten Feststoff mehr als einmal zu waschen. Hierzu kann z.B. der erste Waschvorgang wiederholt werden. Bevorzugt ist es aber, für weitere Waschvorgänge nicht wässrige Lösungen zu verwenden, z.B. eine Mischung aus organischem Komplexliganden und weiterer komplexbildender Komponente.

Der isolierte und gegebenenfalls gewaschene Feststoff wird anschließend, gegebenenfalls nach Pulverisierung, bei Temperaturen von im allgemeinen 20 - 100 °C und bei absoluten Drücken von im allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

Im erfindungsgemäßen Verfahren können als Katalysatoren zur Herstellung der Komponente (B) auch Alkalimetallhydroxide, wie beispielsweise Natriumhydroxid, Kaliumhydroxid oder Cäsiumhydroxid oder Erdalkalimetallhydroxide, wie Magnesiumhydroxid Calciumhydroxid, Strontiumhydroxid oder Bariumhydroxid eingesetzt werden. Die Alkali- oder Erdalkalimetallhydroxide können als Feststoff oder als hochkonzentrierte wässrige Lösungen verwendet werden.

Ganz besonders bevorzugt werden im erfindungsgemäßen Verfahren Natriumhydroxid und/oder Kaliumhydroxid als Alkalimetallhydroxid-Katalysatoren verwendet.

Eine Übersicht über für das erfindungsgemäße Verfahren als Katalysatoren zur Herstellung der Komponente (B) geeignete Amine ist von M. Ionescu et al. in "Advances in Urethanes Science and Technology", 1998, 14, S. 151-218 gegeben worden. Beispielsweise können N,N-Dimethylbenzylamin, Dimethylaminopropanol, N-Methyldiethanolamin, Trimethylamin, Triethylamin, N,N-Dimethylcyclohexylamin, N-Methylpyrrolidin, N,N,N',N'-Tetramethylethylendiamin, Diazabicyclo[2,2,2]octan, 1,4-Dimethylpiperazin, N-Methylmorpholin, unsubstituiertes Imidazol und / oder alkylsubstituierte Imidazolderivate eingesetzt werden.

In einer bevorzugten Ausführungsform der Erfindung wird die Komponente (B) enthaltend eine oder mehrere aliphatische Hydroxylgruppe(n) mit der Carbonsäure (C) enthaltend eine aromatische Hydroxylgruppe optional in Gegenwart des Katalysators (D) gemischt und anschließend zur Hydroxylgruppen-enthaltenden Verbindung (A) umgesetzt (batch-Modus).

In einer alternativen, weniger bevorzugten Ausführungsform der Erfindung wird die Komponente (B) enthaltend eine oder mehrere aliphatische Hydroxylgruppe(n) stufenweise oder kontinuierlich zur Carbonsäure (C) enthaltend eine aromatische Hydroxylgruppe zugegeben und direkt zur Hydroxylgruppen-enthaltenden Verbindung (A) umgesetzt (semi-batch-Modus). Hierbei wird der Katalysator (D) vor der Zugabe zur Komponente (B) und/oder zur Carbonsäure (C) zugegeben und vermischt.

In einer weiteren alternativen, weniger bevorzugten Ausführungsform der Erfindung wird die Carbonsäure (C) enthaltend eine aromatische Hydroxylgruppe zur Komponente (B) enthaltend eine oder mehrere aliphatische Hydroxylgruppe(n) stufenweise oder kontinuierlich zugegeben und direkt zur Hydroxylgruppen-enthaltenden Verbindung (A) umgesetzt (semi-batch-Modus). Hierbei wird der Katalysator (D) vor der Zugabe zur Komponente (B) und/oder zur Carbonsäure (C) zugegeben und vermischt.

Ein Gegenstand der Erfindung ist auch die Hydroxylgruppen-enthaltende Verbindung (A) erhältlich nach dem erfindungsgemäßen Verfahren. In einer Ausführungsform ist die Verbindung (A) schwefelfrei.

Ein weiterer Gegenstand der Erfindung ist ein Verfahren zur Herstellung eines Polyurethans (H), bevorzugt eines Polyurethanschaums (H-1) oder eines kompakten Polyurethans (H-2) durch Umsetzung der Komponenten
(I) enthaltend
   (I-1) die Hydroxylgruppen-enthaltende Verbindung (A) gemäß einem der Ansprüche 1 bis 3 oder die Hydroxylgruppen-enthaltende Verbindung (A) erhältlich nach dem Verfahren gemäß einem der Ansprüche 4 bis 7,
   (I-2) gegebenenfalls eine von (I-1) verschiedene weitere Isocyanat-reaktive Komponente, gegebenenfalls (J) enthaltend
(J-1) Katalysator, und/oder
(J-2) Hilfs- und Zusatzstoff,
   gegebenenfalls (K) enthaltend
      (K) ein Treibmittel, bevorzugt Wasser,
   mit
(L) einem Polyisocyanat.

In einer Ausführungsform der Erfindung ist das Polyurethan (H) ein Polyurethanschaum (H-1), wobei die Umsetzung in Gegenwart eines Treibmittels (K), bevorzugt Wasser und/oder eines physikalischen Treibmittels, erfolgt.

In einer bevorzugten Ausführungsform der Erfindung ist der Polyurethanschaum (H-1) ein Polyurethanweichschaum (H-1a), ein Polyurethanhartschaum (H-1b) oder ein viskoelastischer Polyurethanschaum (H-1c), wobei die vorgenannten Schäume mithilfe dem Fachmann bekannter Verfahren hergestellt werden können.

In einer Ausführungsform der Erfindung erfolgt die Herstellung des Polyurethanweichschaums (H-1a) bei einer Kennzahl von 90 bis 120, wobei die Herstellung in Gegenwart des Treibmittels (K) erfolgt, das 0,8 bis 4,5 Gewichtsteile Wasser, bezogen auf die Summe der Gewichtsteile der Komponenten (I-1) und (I-2) enthält, wobei die Summe der Gewichtsteile der Komponenten (I-1) und (I-2) 100 beträgt. Die Kennzahl ist als das mit dem Faktor 100 multiplizierte Verhältnis von Isocyanatgruppen zu Hydroxygruppen definiert, wobei ein Wassermolekül bei dieser Berechnung 2 Hydroxygruppen beisteuert. Polyurethanweichschaumstoffe und deren Herstellungsverfahren sind dem Fachmann grundsätzlich bekannt, sie sind beispielsweise in G. Oertel (Hrsg.): "Polyurethane Handbook", 2nd Edition, Carl-Hanser-Verlag, München, Wien 1993, S. 177-246 beschrieben.

In einer Ausführungsform der Erfindung erfolgt die Herstellung des Polyurethanhartschaums (H-1b) bei einer Kennzahl von 90 bis 600, wobei die Herstellung in Gegenwart des Treibmittels (K) erfolgt, das 5 bis 25 Gewichtsteile eines Treibmittels, bevorzugt eines physikalischen Treibmittels wie Pentan bezogen auf die Summe der Gewichtsteile der Komponenten (I-1) und (I-2) enthält, wobei die Summe der Gewichtsteile der Komponenten (I-1) und (I-2) 100 beträgt. Polyurethanhartschaumstoffe und deren Herstellungsverfahren sind dem Fachmann grundsätzlich bekannt, sie sind beispielsweise in G. Oertel (Hrsg.): "Polyurethane Handbook", 2nd Edition, Carl-Hanser-Verlag, München, Wien 1993, S. 247-328 beschrieben.

In einer alternativen Ausführungsform der Erfindung ist das Polyurethan (H) ein kompaktes Polyurethan (H-2), wobei die Herstellung des kompakten Polyurethans in Abwesenheit des Treibmittels (K) und/oder Feuchtigkeit erfolgt. Kompakte Polyurethane und deren Herstellungsverfahren sind dem Fachmann grundsätzlich bekannt, sie sind beispielsweise in G. Oertel (Hrsg.): "Polyurethane Handbook", 2nd Edition, Carl-Hanser-Verlag, München, Wien 1993, S. 387-478 beschrieben.

Neben der erfindungsgemäßen Hydroxylgruppen-enthaltenden Verbindung (A) als Komponente kann gegebenenfalls als weitere Isocyanat-reaktive Komponente (I-2) ein weiteres Polyoxyalkylenpolyol wie ein Polyesterpolyol, ein Polycarbonatpolyol, ein Polyethercarbonatpolyol, ein Polyestercarbonatpolyol, ein Polyetherestercarbonatpolyol und/oder ein niedermolekulares Kettenverlängerungs- und/oder Vernetzungsmittel mit OH-Zahlen bzw. NH-Zahlen von 6 bis 1870 mg KOH/g beigemischt werden.

Hierfür geeignete weitere Polyoxyalkylenpolyole können beispielsweise durch anionische Polymerisation von Alkylenoxiden in Gegenwart von Alkalihydroxiden oder Alkalialkoholaten als Katalysatoren und unter Zusatz mindestens eines Startermoleküls, das 2 bis 8 Zerewitinoff-aktive Wasserstoffatome gebunden enthält, oder durch kationische Polymerisation von Alkylenoxiden in Gegenwart von Brønstedt- oder Lewis Säuren wie Trifluormethansulfonsäure, Perchlorsäure, Antimonpentachlorid, Bortrifluorid Etherat oder Tris(pentafluorphenyl)boran erhalten werden. Geeignete Katalysatoren sind natürlich auch solche vom Doppelmetallcyanidkomplextyp, wie sie beispielsweise in US-A 3 404 109, US-A 3 829 505, US-A 3 941 849, US-A 5 158 922, US-A 5 470 813, EP-A 700 949, EP-A 743 093, EP A 761 708, WO 97/40086, WO 98/16310 und WO 00/47649 beschrieben sind. Geeignete Alkylenoxide sowie einige geeignete Starterverbindungen sind in vorangegangenen Abschnitten bereits beschrieben worden. Ergänzend zu erwähnen sind beispielsweise Tetrahydrofuran als lewis-sauer polymerisierbarer cyclischer Ether und Wasser als Startermolekül. Die weiteren Polyoxyalkylenpolyole, vorzugsweise Polyoxypropylenpolyoxyethylenpolyole, besitzen vorzugsweise zahlenmittlere Molmassen von 200 bis 8000 Da. Als weitere Polyoxyalkylenpolyole eignen sich ferner polymermodifizierte Polyoxyalkylenpolyole, vorzugsweise Pfropfpolyoxyalkylenpolyole, insbesondere solche auf Styrol- und/oder Acrylnitrilbasis, die durch in-situ Polymerisation von Acrylnitril und / oder Styrol oder vorzugsweise Mischungen aus Styrol und Acrylnitril, z.B. im Gewichtsverhältnis 90:10 bis 10:90. vorzugsweise 70:30 bis 30:70, zweckmäßigerweise in den vorgenannten weiteren Polyoxyalkylenpolyolen hergestellt werden, sowie Polyoxyalkylenpolyol-Dispersionen, die als disperse Phase, üblicherweise in einer Menge von 1 bis 50 Gew.-%, vorzugsweise 2 bis 25 Gew.-%, anorganische Füllstoffe, Polyharnstoffe, Polyhydrazide, tert.-Aminogruppen gebunden enthaltende Polyurethane und/oder Melamin enthalten.

Geeignete Polyesterpolyole können beispielsweise aus organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbon-säuren kommen beispielsweise in Betracht: Bernsteinsäure, Glutarsäure, Adipinsäure, Korksäure, Azelainsäure, Sebacinsäure, Decandicarbonsäure, Dodecandicarbonsäure, Maleinsäure, Fumar-säure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z. B. Dicarbonsäuremono- und/oder diester von Alkoholen mit 1 bis 4 Kohlenstoffatomen oder Dicarbonsäureanhydride eingesetzt werden. Vorzugsweise verwendet werden Dicarbonsäuregemische aus Bernstein, Glutar- und Adipinsäure in Mengenverhältnissen von beispielsweise 20 bis 35 / 40 bis 60 / 20 bis 36 Gew. Teilen und insbesondere Adipinsäure. Beispiele für zwei und mehrwertige Alkohole sind Ethandiol, Diethylenglykol, 1,2 bzw. 1,3 Propandiol, Dipropylenglykol, Methyl-1,3-Propan-diol, 1,4 Butandiol, 1,5 Pentandiol, 3-Methyl-1,5-pentandiol, 1,6 Hexandiol, Neopentylglykol, 1,10 Decandiol, 1,12-Dodecandiol, Glycerin, Trimethylolpropan und Pentaerythrit. Vorzugsweise verwendet werden 1,2-Ethandiol, Diethylenglykol, 1,4 Butandiol, 1,6 Hexandiol, Glycerin, Trimethylolpropan oder Mischungen aus mindestens zwei der genannten mehrwertigen Alkohole, insbesondere Mischungen aus Ethandiol, 1,4-Butandiol und 1,6 Hexandiol, Glycerin und/oder Tri-methylolpropan. Eingesetzt werden können ferner Polyesterpolyole aus Lactonen z.B. Capro-lacton oder Hydroxycarbonsäuren, z. B. Hydroxycapronsäure und Hydroxyessigsäure.

Zur Herstellung der Polyesterpolyole können die organischen, aromatischen oder aliphatischen Polycarbonsäuren und/oder Polycarbonsäurederivate und mehrwertigen Alkohole katalysatorfrei oder in Gegenwart von Veresterungskatalysatoren, zweckmäßigerweise in einer Atmosphäre aus Inertgasen, wie z.B. Stickstoff, Helium oder Argon und auch in der Schmelze bei Temperaturen von 150 bis 300°C, vorzugsweise 180 bis 230°C, gegebenenfalls unter vermindertem Druck, bis zu den gewünschten Säure-und OH-Zahlen polykondensiert werden. Die Säurezahl ist vorteilhafter-weise kleiner als 10 mg KOH / g, vorzugsweise kleiner als 2,5 mg KOH / g.

Nach einem bevorzugten Herstellverfahren wird das Veresterungsgemisch bei den oben genannten Temperaturen bis zu einer Säurezahl von 80 bis 30 mg KOH / g, vorzugsweise 40 bis 30 mg KOH / g, unter Normaldruck und anschließend unter einem Druck von kleiner als 500 mbar, vorzugsweise 1 bis 150 mbar, polykondensiert. Als Veresterungskatalysatoren kommen beispielsweise Eisen, Cadmium, Kobalt , Blei , Zink , Antimon , Magnesium , Titan und Zinnkatalysatoren in Form von Metallen, Metalloxiden oder Metallsalzen in Betracht. Die Polykondensation von aromatischen oder aliphatischen Carbonsäuren mit mehrwertigen Alkoholen kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Das zum Erhalt einer gewünschten OH-Zahl, Funktionalität und Viskosität zu wählende Verhältnis von Dicarbonsäure(derivat) und mehrwertigem Alkohol und die zu wählende Alkoholfunktionalität kann vom Fachmann in einfacher Weise ermittelt werden.

Geeignete Polycarbonatpolyole sind solche der an sich bekannten Art, die beispielsweise durch Umsetzung von Diolen, wie 1,2-Propandiol, 1,4-Butandiol, 1,6-Hexandiol, Diethylenglykol, Triethylenglykol, Tetraethylenglykol oligo-Tetramethylenglykol und/oder oligo-Hexa-methylenglykol mit Diarylcarbonaten und/oder Dialkylcarbonaten, z.B. Diphenylcarbonat, Dimethylcarbonat sowie α-ω-Bischloroformiaten oder Phosgen hergestellt werden können. Die ebenfalls geeigneten Polyethercarbonatpolyole werden durch Copolymerisation cyclischer Epoxide und Kohlendioxid erhalten, vorzugsweise werden solche Copolymerisationen unter hohem Druck durchgeführt und durch Doppelmetallcyanid- (DMC-)Verbindungen katalysiert.

Niedermolekulare, vorzugsweise tri- oder tetrafunktionelle Vernetzungsmittel oder difunktionale Kettenverlängerungsmittel können als weitere Isocyanat-reaktive Komponente (I-2) eingesetzt werden. Geeignete Vernetzungsmittel, z. B. 3- oder 4-wertige Alkohole und oligomere Polyoxyalkylen-polyole mit einer Funktionalität von 3 bis 4, besitzen üblicherweise Molmassen von 90 bis 300 Da. Geeignete Vernetzungsmittel sind beispielsweise Glycerin, Trimethylolpropan oder Pentaerythrit. Als Kettenverlängerungsmittel vorzugsweise verwendet werden Alkandiole mit 2 bis 12 Kohlenstoffatomen, z.B. Ethandiol, 1,3-Propandiol, 1,5-Pentandiol, 1,6-Hexandiol, 1,7 Heptandiol, 1,8 Octandiol, 1,9-Nonandiol, 1,10-Decandiol und insbesondere 1,4-Butandiol und Dialkylenglykole mit 4 bis 8 Kohlenstoffatomen, z.B. Diethylengykol und Dipropylengykol. Geeignet sind auch verzweigtkettige und/oder ungesättigte Alkandiole mit üblicherweise nicht mehr als 12 Kohlenstoffatomen, wie z.B. 1,2 Propandiol, 2-Methyl-1,3-Propandiol, 3-Methyl-1,5-pentandiol, 2,2-Dimethyl-1,3-propandiol, 2-Butyl-2-ethyl-1,3-propandiol, 2-Buten-1,4-diol und 2-Butin-1,4-diol, Diester der Terephthalsäure mit Glykolen mit 2 bis 4 Kohlenstoffatomen, wie z.B. Terephthalsäure-bisethylenglykolester oder Terephthalsäure-bis-1,4-butylenglykolester und Hydroxyalkylenether des Hydrochinons oder Resorcins, z.B. 1,4-Di-(β-hydroxyethyl)-hydrochinon oder 1,3-(β-Hydroxyethyl)-resorcin. Auch können Alkanolamine mit 2 bis 12 Kohlenstoffatomen wie Ethanolamin, 2-Aminopropanol und 3-Amino-2,2-dimethylpropanol, N Alkyldialkanolamine, z.B. N-Methyl- und N-Ethyl-diethanolamin, (cyclo)aliphatische Diamine mit 2 bis 15 Kohlenstoffatomen, wie 1,2-Ethylendiamin, 1,3-Propylendiamin, 1,4 Butylendiamin und 1,6-Hexamethylendiamin, Isophorondiamin, 1,4-Cyclohexamethylendiamin und 4,4'-Diamino-dicyclohexylmethan, N-Alkyl-, N,N' dialkylsubstituierte und aromatische Diamine, die auch am aromatischen Rest durch Alkylgruppen substituiert sein können, mit 1 bis 20, vorzugsweise 1 bis 4 Kohlenstoffatomen im N Alkylrest, wie N,N' Diethyl, N,N' Disec. pentyl-, N,N'-Di sec. hexyl, N,N' Di-sec. decyl und N,N' Dicyclohexyl, p bzw. m Phenylendiamin, N,N' Dimethyl , N,N' Diethyl , N,N' Diisopropyl , N,N' Di sec.butyl , N,N' Dicyclohexyl-4,4' diamino diphenylmethan, N,N' Di sec. butylbenzidin, Methylen-bis(4-amino-3-benzoe-säuremethylester), 2,4-Chlor-4,4'-diamino-diphenylmethan, 2,4- und 2,6-Toluylendiamin verwendet werden.

Verwendbar sind auch Gemische unterschiedlicher Kettenverlängerungs- und Vernetzungsmittel untereinander sowie Gemische aus Kettenverlängerungs- und Vernetzungsmitteln.

Als Katalysator (J-1) können dem Fachmann geläufige Aminkatalysatoren eingesetzt werden, z.B. tertiäre Amine wie Triethylamin, Tributylamin, N-Methyl-morpholin, N-Ethyl-morpholin, N,N,N',N'-Tetramethyl-ethylendiamin, Pentamethyl-diethylen-triamin und höhere Homologe (DE-OS 26 24 527 und 26 24 528), 1,4-Diaza-bicyclo-(2,2,2)-octan, N-Methyl-N'-dimethylaminoethyl-piperazin, Bis-(dimethylaminoalkyl)-piperazine (DE-A 26 36 787), N,N-Dimethylbenzylamin, N,N-Dimethylcyclohexylamin, N,N-Diethylbenzylamin, Bis-(N,N-diethylaminoethyl)adipat, N,N,N',N'-Tetramethyl-1,3-butandiamin, N,N-Dimethyl-β-phenyl-ethyl-amin, Bis-(dimethylaminopropyl)-harnstoff, 1,2-Dimethylimidazol, 2-Methylimidazol, monocyclische und bicyclische Amidine (DE-A 17 20 633), Bis-(dialkylamino)-alkylether (US-A 3 330 782, DE-B 10 30 558, DE-A 18 04 361 und 26 18 280) sowie Amidgruppen (vorzugsweise Form-amidgruppen) aufweisende tertiäre Amine gemäß DE-A 25 23 633 und 27 32 292). Als Katalysatoren (J-1) kommen auch an sich bekannte Mannichbasen aus sekundären Aminen, wie Dimethylamin, und Aldehyden, vorzugsweise Formaldehyd, oder Ketonen wie Aceton, Methyl-ethylketon oder Cyclohexanon und Phenolen, wie Phenol oder alkylsubstituierten Phenolen, in Frage. Als Katalysatoren (J-1) sind auch tertiäre Amine mit gegenüber Isocyanatgruppen aktiven Wasserstoffatomen einsetzbar, z.B. Triethanolamin, Triisopropanolamin, N-Methyldiethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundär-tertiäre Amine gemäß DE-A 27 32 292. Als Katalysatoren (J-1) können ferner Silaamine mit Kohlenstoff-Silizium-Bindungen, wie sie in US-A 3 620 984 beschrieben sind, eingesetzt werden, z.B. 2,2,4-Trimethyl-2-silamorpholin und 1,3-Diethyl-aminomethyl-tetramethyl-disiloxan. Weiterhin kommen auch stickstoffhaltige Basen wie Tetraalkylammoniumhydroxide, ferner Hexahydrotriazine in Betracht. Die Reaktion zwischen - Isocyanatgruppen und zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet.

Werden für die Katalyse der Polyurethanreaktion Amine als Katalysatoren (J-1) eingesetzt, so ist natürlich zu beachten, dass unter Amin-Katalyse hergestellte Polyoxyalkylenpolyole bereits gegebenenfalls katalytisch aktive Amine enthalten. Durch geeignete Versuchsreihen ist es dem Fachmann jedoch leicht möglich, die Mengen gegebenenfalls noch zuzusetzender Aminkatalysatoren zu ermitteln.

Des Weiteren können als Katalysatoren (J-1) für diesen Zweck übliche organische Metallverbindungen eingesetzt werden, vorzugsweise organische Zinnverbindungen wie Zinn-(II)-Salze von organischen Carbonsäuren, z. B. Zinn-(II)-acetat, Zinn-(II)-octoat, Zinn-(II)-ethylhexoat und Zinn-(II)-Taurat und, weniger bevorzugt, die Dialkylzinn-(IV)-salze von Mineralsäuren oder organischen Carbonsäuren, z. B. Dibutylzinndiacetat, Dibutylzinndilaurat, Dibutylzinnmaleat, Dioctylzinndiacetat und Dibutylzinndichlorid. Daneben können auch schwefelhaltige Verbindungen wie Di-n-octyl-zinnmercaptid (US A 3 645 927) Verwendung finden.

Katalysatoren (J-1), welche die Trimerisierung von Isocyanatgruppen in besonderer Weise katalysieren, werden zur Herstellung von Polyurethanwerkstoffen mit hohen Anteilen an so genannten Poly(isocyanurat)strukturen ("PIR-Schaumstoffe") eingesetzt. Üblicherweise kommen für die Herstellung solcher Materialien Rezepturen mit signifikanten Überschüssen von NCO-Gruppen gegenüber OH-Gruppen zur Anwendung. PIR-Schaumstoffe werden üblicherweise bei Kennzahlen von 180 bis 600 hergestellt. Katalysatoren (J-1), die zur Ausprägung von Isocyanuratstrukturen beitragen, sind Metallsalze wie beispielsweise Kalium-oder Natriumacetat, Natriumoctoat und Aminoverbindungen wie 1,3,5-Tris(3-dimethylaminopropyl)hexahydrotriazin.

Die Katalysatoren (J-1) bzw. Katalysatorkombinationen aus verschiedenen Katalysatoren (J-1) werden in der Regel in Mengen zwischen etwa 0,001 und 10 Gew.-%, insbesondere 0,01 bis 4 Gew.-%, bezogen auf die Gesamtmenge der Komponenten (I-1) und (I-2), eingesetzt.

Bei der Herstellung des Polyurethans (H) können gegebenenfalls Hilfs- und Zusatzstoffe (J-2) mitverwendet werden. Genannt seien beispielsweise oberflächenaktive Zusatz-stoffe, wie Emulgatoren, Schaumstabilisatoren, Zellregler, Flammschutzmittel, Keimbildungsmittel, Oxidationsverzögerer, Stabilisatoren, Gleit- und Entformungsmittel, Farbstoffe, Dispergierhilfen und Pigmente. Als Emulgatoren kommen z.B. die Natriumsalze von Ricinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Hilfs- und Zusatzstoffe (J-2) mitverwendet werden. Als Schaumstabilisatoren kommen vor allem Polyethersiloxane, in Frage. Diese Verbindungen sind im Allgemeinen so aufgebaut, dass Copolymerisate aus Ethylenoxid und Propylenoxid mit einem Polydimethylsiloxanrest verbunden sind. Derartige Schaumstabilisatoren können gegenüber Isocyanaten reaktiv sein oder durch Veretherung der endständigen OH-Gruppen gegenüber Isocyanaten unreaktiv sein. Sie sind z.B. in US-A 2 834 748, 2 917 480 und 3 629 308 beschrieben. Allgemeine Strukturen solcher Schaumstabilisatoren sind in G. Oertel (Hrsg.): "Kunststoff-Handbuch", Band VII, Carl-Hanser-Verlag, München, Wien 1993, S. 113 - 115 wiedergegeben. Von besonderem Interesse sind vielfach über Allophanatgruppen verzweigte Polysiloxan-Polyoxyalkylen-Copolymere gemäß DE-A 25 58 523. Geeignet sind auch andere Organopolysiloxane, oxyethylierte Alkylphenole, oxyethylierte Fettalkohole und Paraffinöle, und Zellregler wie Paraffine, Fettalkohole und Dimethylpolysiloxane. Zur Verbesserung der Emulgierwirkung, der Dispergierung des Füllstoffs, der Zellstruktur und/oder zu deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Gesamtmenge der Komponenten (I-1) und (I-2) angewandt. Zugesetzt werden können auch Reaktionsverzögerer, z.B. sauer reagierende Stoffe wie Salzsäure, oder organische Säuren und Säurehalogenide, sowie Pigmente oder Farbstoffe und an sich bekannte Flamm-schutzmittel, z.B. Tris-(chlorethyl)phosphat, Trikresylphosphat oder Ammoniumphosphat und -polyphosphat, ferner Stabilisatoren gegen Alterungs- und Witterungseinflüsse, Weichmacher sowie fungizid und bakterizid wirkende Substanzen. Weitere Beispiele von gegebenenfalls erfindungsgemäß mitzuverwendenden oberflächenaktiven Hilfs- und Zusatzstoffen (J-2) und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind in R. Vieweg, A. Höchtlen (Hrsg.): "Kunststoff-Handbuch", Band VII, Carl-Hanser-Verlag, München 1966, S.103-113 beschrieben.

Als gegebenenfalls einzusetzendes Treibmittel (K) kann Wasser verwendet werden, das mit den organischen Polyisocyanaten oder mit den Isocyanatgruppen aufweisenden Prepolymeren in situ unter Bildung von Kohlendioxid und Aminogruppen reagiert, die ihrerseits mit weiteren Isocyanatgruppen zu Harnstoffgruppen weiterreagieren und hierbei als Kettenverlängerungsmittel wirken. Wird, um die gewünschte Dichte einzustellen, der Polyurethanformulierung Wasser zugegeben, wird dieses üblicherweise in Mengen von 0,001 bis 6,0 Gew.-%, bezogen auf das Gewicht der Komponenten (I-1), (I-2), (J-1) und (J-2) verwendet.

Als Treibmittel (K) können anstelle von Wasser oder vorzugsweise in Kombination mit Wasser auch Gase oder leicht flüchtige anorganische oder organische Substanzen, die unter dem Einfluss der exothermen Polyadditionsreaktion verdampfen und vorteilhafterweise einen Siedepunkt unter Normaldruck im Bereich von -40 bis 120 °C, vorzugsweise von 10 bis 90 °C besitzen, als physikalische Treibmittel eingesetzt werden. Als organische Treibmittel können z.B. Aceton, Ethylacetat, Methylacetat, halogensubstituierte Alkane wie Methylenchlorid, Chloroform, Ethylidenchlorid, Vinylidenchlorid, Monofluortrichlormethan, Chlordifluormethan, Dichlordifluor-methan, HFKWs wie R 134a, R 245fa und R 365mfc, teilhalogenierte Olefine (sogenannte HFOs oder HCFOs) wie trans-1,3,3,3-Tetrafluorpropen oder trans-1-Chlor-3,3,3-trifluorpropen, ferner unsubstituierte Alkane wie Butan, n-Pentan, Isopentan, Cyclopentan, Hexan, Heptan oder Diethylether verwendet werden. Diese Treibmittel können auch als Gemische verwendet werden. Als anorganische Treibmittel kommen z.B. Luft, CO₂ oder N₂O in Frage. Eine Treibwirkung kann auch erzielt werden durch Zusatz von Verbindungen, die sich bei Temperaturen oberhalb Raumtemperatur unter Abspaltung von Gasen, beispielsweise von Stickstoff und/oder Kohlendioxid, zersetzen wie Azoverbindungen, z.B. Azodicarbonamid oder Azoisobuttersäurenitril, oder Salzen wie Ammoniumbicarbonat, Ammoniumcarbamat oder Ammoniumsalzen organischer Carbonsäuren, z.B. der Monoammoniumsalze der Malonsäure, Borsäure, Ameisensäure oder Essigsäure. Einzelheiten über die Verwendung von Treibmitteln und Kriterien für die Treibmittelwahl sind in R. Vieweg, A. Höchtlen (Hrsg.): "Kunststoff-Handbuch", Band VII, Carl-Hanser-Verlag, München 1966, S. 108f, 453ff und 507-510 sowie in D. Randall, S. Lee (Hrsg.): "The Polyurethanes Book", John Wiley & Sons, Ltd., London 2002, S. 127 - 136, S 232 - 233 und S. 261 beschrieben.

Die zweckmäßig einzusetzende Menge an festen Treibmitteln, niedrigsiedenden Flüssigkeiten oder Gasen, die jeweils einzeln oder in Form von Mischungen, z. B. als Flüssigkeits- oder Gasmischungen oder als Gas-Flüssigkeitsmischungen eingesetzt werden können, hängt ab von der angestrebten PUR-Werkstoffdichte und der eingesetzten Wassermenge. Die erforderlichen Mengen können experimentell leicht ermittelt werden. Zufriedenstellende Ergebnisse liefern üblicherweise Feststoffmengen von 0,5 bis 35 Gew.-Teilen, vorzugsweise 2 bis 15 Gew.-Teilen, Flüssigkeitsmengen von 1 bis 30 Gew.-Teilen, vorzugsweise von 3 bis 18 Gew.-Teilen und/oder Gasmengen von 0,01 bis 80 Gew.-Teilen, vorzugsweise von 10 bis 35 Gew.-Teilen, jeweils bezogen auf das Gewicht der Aufbaukomponenten (I-1), (I-2) und (L). Die Gasbeladung mit z. B. Luft, Kohlendioxid, Stickstoff und/oder Helium kann entweder über die Formulierungskomponenten (I-1), (I-2), (J-1) und (J-2) oder über das Polyisocyanat als Komponente (L) bzw. über die Komponenten (I-1), (I-2), (J-1) und (J-2) einerseits und Komponente (L) andererseits erfolgen.

Geeignete Polyisocyanate (L) sind cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel Q(NCO)n in der n = 2-4, vorzugsweise 2, und Q einen aliphatischen Kohlenwasserstoffrest mit 2-18, vorzugsweise 6-10 C-Atomen, einen cycloaliphatischen Kohlenwasserstoffrest mit 4-15, vor-zugsweise 5-10 C-Atomen, einen aromatischen Kohlenwasserstoffrest mit 6-15, vorzugsweise 6-13 C-Atomen, oder einen aralipliatischen Kohlenwasserstoffrest mit 8-15, vorzugsweise 8-13 C-Atomen, bedeuten. Geeignet sind z.B. Ethylendiisocyanat, 1,4-Tetramethylendiisocyanat, 1,6-Hexamethylendiisocyanat (HDI), 1,12-Dodecandiisocyanat, Cyclobutan-1,3-diisocyanat, Cyclo-hexan-1,3- und -1,4-diisocyanat sowie beliebige Gemische dieser Isomeren, 1 Isocyanato-3,3,5-tri-methyl-5-isocyanatomethyl-cyclohexan (DE-B 1 202 785, US-A 3 401 190), 2,4- und 2,6-Hexahydrotoluylendiisocyanat sowie beliebige Gemische dieser Isomeren, Hexahydro-1,3- und -1,4-phenylen-diisocyanat, Perhydro-2,4'- und -4,4'-diphenyl-methan-diisocyanat, 1,3- und 1,4-Phenylendiisocyanat (DE A 196 27 907), 1,4-Duroldiisocyanat (DDI), 4,4'-Stilbendiisocyanat (DE-A 196 28 145), 3,3'-Dimethyl-4,4'-biphenylendiisocyanat (DIBDI) (DE-A 195 09 819) 2,4- und 2,6-Toluylendiisocyanat (TDI) sowie beliebige Gemische dieser Isomeren, Diphenylmethan-2,4'-diisocyanat und/oder Diphenylmethan-4,4'-diisocyanat (MDI) oder Naphthylen-1,5-diiso-cyanat (NDI).

Ferner kommen beispielsweise erfindungsgemäß in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in GB-A 874 430 und GB A 848 671 beschrieben werden, m- und p-Isocyanatophenylsulfonylisocyanate gemäß US-A 3 454 606, perchlorierte Arylpolyisocyanate, wie sie in US-A 3 277 138 beschrieben werden, Carbodiimidgruppen auf-weisende Polyisocyanate, wie sie in US-A 3 152 162 sowie in DE-A 25 04 400, 25 37 685 und 25 52 350 beschrieben werden, Norbornan-diisocyanate gemäß US-A 3 492 301, Allophanatgruppen aufweisende Polyisocyanate, wie sie in GB A 994 890, der BE-B 761 626 und NL-A 7 102 524 beschrieben werden, Isocyanuratgruppen aufweisende Polyisocyanate, wie sie in US-A 3 001 9731, in DE-C 10 22 789, 12 22 067 und 1 027 394 sowie in DE-A 1 929 034 und 2 004 048 beschrieben werden, Urethangruppen aufweisende Polyisocyanate, wie sie z.B. in der BE-B 752 261 oder in US A 3 394 164 und 3 644 457 beschrieben werden, acylierte Harnstoffgruppen aufweisende Polyisocyanate gemäß DE-C 1 230 778, Biuretgruppen aufweisende Polyisocyanate, wie sie in US-A 3 124 605, 3 201 372 und 3 124 605 sowie in GB-B 889 050 beschrieben werden, durch Telomerisationsreaktionen hergestellte Polyisocyanate, wie sie in US-A 3 654 106 beschrieben werden, Estergruppen aufweisende Polyisocyanate, wie sie in GB-B 965 474 und 1 072 956, in US-A 3 567 763 und in DE-C 12 31 688 genannt werden, Umsetzungsprodukte der obengenannten Isocyanate mit Acetalen gemäß DE-C 1 072 385 und polymere Fettsäureester enthaltende Polyisocyanate gemäß US-A 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("Roh-MDI") und Carbodiimidgruppen, Urethangrupppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Gut geeignet sind auch Naphthylen-1,5-diisocyanat und Gemische der genannten Polyisocyanate.

Es können auch Isocyanatgruppen aufweisende Prepolymere verwendet werden, die erhältlich sind durch Umsetzung einer Teil- oder der Gesamtmenge der erfindungsgemäß einzusetzenden Hydroxylgruppen-enthaltenden Verbindung (A) und / oder einer Teil- oder der Gesamtmenge der den erfindungsgemäß einzusetzenden Hydroxylgruppen-enthaltenden Verbindung (A) ggf. beizumischenden, oben beschriebenen isocyanatreaktiven Komponenten mit mindestens einem aromatischen Di- oder Polyisocyanat aus der Gruppe TDI, MDI, DIBDI, NDI, DDI, vorzugsweise mit 4,4'-MDI und/oder 2,4-TDI und/oder 1,5-NDI zu einem Urethangruppen, vorzugsweise Urethangruppen und Isocyanatgruppen aufweisenden Polyadditionsprodukt. Solche Polyadditionsprodukte weisen NCO-Gehalte von 0,05 bis 40,0 Gew.-% auf. Nach einer bevorzugt angewandten Ausführungsform werden die Isocyanatgruppen enthaltenden Prepolymere hergestellt durch Umsetzung von ausschließlich höhermolekularen Polyhydroxylverbindungen, also der erfindungsgemäß einzusetzenden Hydroxylgruppen-enthaltenden Verbindung (A), und / oder Polyetheresterpolyolen, Polyetherpolyolen, Polyesterpolyolen oder Polycarbonatpolyolen mit den Polyisocyanaten, vorzugsweise 4,4'-MDI, 2,4-TDI und/oder 1,5 NDI.

Die Isocyanatgruppen aufweisenden Prepolymere können in Gegenwart von Katalysatoren hergestellt werden. Es ist jedoch auch möglich, die Isocyanatgruppen aufweisenden Prepolymere in Abwesenheit von Katalysatoren herzustellen und diese der Reaktionsmischung erst später zur Herstellung der PUR-Werkstoffe zuzufügen.

In einer Ausführungsform der Erfindung ist das Polyisocyanat (L) eine oder mehrere Verbindungen und wird ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat, bevorzugt 2,4- und 2,6-Toluylendiisocyanat.

Zur Herstellung des Polyurethans (H) kann das Mengenverhältnis der Isocyanatgruppen in den Polyisocyanaten (L). zu den gegenüber den Isocyanaten reaktiven Wasserstoffen in den Komponenten (I-1), (I-2), (K), (J-1) und (J-2) stark variiert werden. Üblich sind Verhältnisse von 0,9: 1 bis 6:1.

Die erfindungsgemäßen Polyurethane (H) können nach den in der Literatur beschriebenen Verfahren, z.B. dem one-shot- oder dem Prepolymer-Verfahren mit Hilfe von dem Fachmann im Prinzip bekannten Mischvorrichtungen hergestellt werden. Die erfindungsgemäß herstellbare Hydroxylgruppen-enthaltende Verbindung (A) kann als Komponente (I-1), gegebenenfalls zusammen mit der Isocyanatreaktiven Komponente (I-2), mit dem Polyisocyanat (L) und ggf. zu verwendenden Treibmittel (K) unter Einsatz der üblichen Niederdruck- bzw Hochdruckverarbeitungsmaschinen insbesondere zu Polyurethanweichschaumstoffen, die beispielsweise Einsatz finden bei der Herstellung von Automobilsitzen, Polstermöbeln und Matratzen, verarbeitet werden. Die erfindungsgemäße Hydroxylgruppen-enthaltende Verbindung (A) als Komponente (I-1) kann hierbei dem maschinellen Mischaggregat entweder als Einzelkomponente oder als Bestandteil einer vorab hergestellten Formulierung zusammen mit den Komponenten (I-2), (J) und (K), insofern vorhanden, und Komponente (L) zugeführt werden. Als besonders vorteilhaft für die maschinelle Verarbeitung der erfindungsgemäßen Hydroxylgruppen-enthaltende Verbindung (A) erweist sich hierbei ihre niedrige Viskosität.

Ein Gegenstand der Erfindung ist auch ein Polyurethan (H), bevorzugt ein Polyurethanschaum (H-1) oder ein kompaktes Polyurethan (H-2), erhältlich nach dem erfindungsgemäßen Verfahren.

In einer Ausführungsform der Erfindung ist das Polyurethan (H), bevorzugt der Polyurethanschaum (H-1) oder das kompakte Polyurethan (H-2), schwefelfrei.

In einer Ausführungsform der Erfindung enthält das Polyurethan (H), bevorzugt der Polyurethanschaum (H-1) oder das kompakte Polyurethan (H-2) aromatische Urethanbindungen, bevorzugt phenylische oder naphthylische Urethanbindungen und besonders bevorzugt phenylische Urethanbindungen, wobei die aromatischen Urethanbindungen, bevorzugt die phenylischen oder die naphthylischen Urethanbindungen und besonders bevorzugt die phenylischen Urethanbindungen durch Umsetzung der Hydroxylgruppen-enthaltenden Verbindung (A) enthaltend aromatische Hydroxylgruppen, bevorzugt phenylische oder naphthylische Hydroxylgruppen und besonders bevorzugt phenylische Hydroxylgruppen, mit den Isocyanat-Gruppen des Polyisocyanats als Komponente (L) gebildet werden. In einer bevorzugten Ausführungsform der Erfindung ist das Polyurethan (H), bevorzugt der Polyurethanschaum (H-1) oder das kompakte Polyurethan (H-2), schwefelfrei und der berechnete Anteil der aromatischen Urethanbindungen, bevorzugt der phenylischen oder der naphthylischen Urethanbindungen und besonders bevorzugt der phenylischen Urethanbindungen im Polyurethan (H), bevorzugt im Polyurethanschaum (H-1) oder im kompakten Polyurethan (H-2), beträgt von 20 mol-% bis 100 mol-%, bevorzugt von 25 mol-% bis 100 mol-% und besonders bevorzugt von 30 mol-% bis 100 mol-%, bezogen auf die Summe aller Urethanbindungen des Polyurethans (H), bevorzugt des Polyurethanschaums (H-1) oder des kompakten Polyurethans (H-2).

Ein Gegenstand der Erfindung ist ebenfalls die Verwendung der erfindungsgemäßen Hydroxylgruppen-enthaltenden Verbindung (A) oder der Hydroxylgruppen-enthaltenden Verbindung (A) erhältlich nach dem erfindungsgemäßen Verfahren zur Erleichterung der Spaltung von Urethanbindungen in einem Prozess zur Wiederverwertung eines Polyurethans.

Ein Gegenstand der Erfindung ist auch ein Verfahren zur Herstellung eines Polyurethans (M), bevorzugt eines thermoplastischen Polyurethans (M-1), umfassend eine thermische Behandlung oder eine enzymatische Behandlung, bevorzugt eine thermische Behandlung, des erfindungsgemäßen Polyurethans (H), bevorzugt des Polyurethanschaums (H-1) oder des kompakten Polyurethans (H-2) erhalten nach dem erfindungsgemäßen Verfahren.

In einer Ausführungsform der Erfindung wird die thermische Behandlung bei einer Temperatur T(M) von 100 °C bis 220 °C, bevorzugt von 130 °C bis 200 °C durchgeführt.

In einer Ausführungsform der Erfindung wird die thermische Behandlung bei einem Druck p(M) von 50 bar bis 300 bar, bevorzugt von 80 bar bis 200 bar durchgeführt.

In einer Ausführungsform der Erfindung erfolgt die thermische Behandlung in einer Reaktionszeit t(M) von 0,1 min bis 20 min, bevorzugt von 0,2 min bis 15 min.

In einer Ausführungsform der Erfindung erfolgt die thermische Behandlung in einem gleichläufigen Mehrschneckenextruder, wie einem Doppelschnecken- oder einem Vierschneckenextruder oder einem Ringextruder, einem Co-Kneter oder einem Planetenwalzenextruder oder in Rotor-Stator-Systemen. Weitere geeignete Vorrichtungen sind Ein- oder Zweiwellen-Großvolumenkneter. Die großvolumigen Zweiwellenkneter können gleich- oder gegenläufig sein. Beispiele für großvolumige Kneter sind z.B. CRP (von List Technology AG), Reacom (Buss-SMS-Canzler GmbH), Reasil (Buss-SMS-Canzler GmbH), KRC Kneter (Kurimoto, Ltd).

In einer Ausführungsform der Erfindung ist das Polyurethan (M) ein thermoplastisches Polyurethan (M-1).

Ein Gegenstand der Erfindung ist auch ein Polyurethan (M), bevorzugt ein thermoplastisches Polyurethan (M-1), erhältlich nach dem erfindungsgemäßen Verfahren.

In einer Ausführungsform der Erfindung ist das Polyurethan (M), bevorzugt das thermoplastische Polyurethan (M-1) schwefelfrei. In einer Ausführungsform der Erfindung enthält das Polyurethan (M), bevorzugt das thermoplastische Polyurethan (M-1) keine aromatischen Urethanbindungen, bevorzugt keine phenylischen oder keine naphthylischen Urethanbindungen und besonders bevorzugt keine phenylischen Urethanbindungen. In einer bevorzugten Ausführungsform der Erfindung enthält das Polyurethan (M), bevorzugt das thermoplastische Polyurethan (M-1) aromatische Hydroxylgruppen, bevorzugt phenylische oder naphthylische Hydroxylgruppen und besonders bevorzugt phenylische Hydroxylgruppen.

In einer alternativen Ausführungsform enthält das Polyurethan (M), bevorzugt das thermoplastische Polyurethan (M-1) aromatische Urethanbindungen, bevorzugt phenylische oder naphthylische Urethanbindungen und besonders bevorzugt phenylische Urethanbindungen, wobei der Anteil der aromatischen Urethanbindungen, bevorzugt der phenylischen oder der naphthylischen Urethanbindungen und besonders bevorzugt der phenylischen Urethanbindungen, bezogen auf die Summe aller Urethanbindungen des Polyurethans (M), bevorzugt des thermoplastischen Polyurethans (M-1) geringer ist als für das Polyurethan (H), bevorzugt den Polyurethanschaum (H-1) oder das kompakte Polyurethan (H-2). Bevorzugt wird der Anteil der aromatischen Urethanbindungen, bevorzugt der phenylischen oder der naphthylischen Urethanbindungen und besonders bevorzugt der phenylischen Urethanbindungen mittels einer IR-Methode bestimmt, wobei der Fachmann aufgrund seines Fachwissens eine geeignete IR-Methode auswählt.

In einer bevorzugten Ausführungsform der Erfindung ist der Anteil der aromatischen Urethanbindungen, bevorzugt der phenylischen oder der naphthylischen Urethanbindungen und besonders bevorzugt der phenylischen Urethanbindungen, bezogen auf die Summe aller Urethanbindungen des Polyurethans (M), bevorzugt des thermoplastischen Polyurethans (M-1) geringer als im Polyurethan (H), wobei das Polyurethan (M), bevorzugt das thermoplastische Polyurethan (M-1) aromatische Hydroxylgruppen, bevorzugt phenylische oder naphthylische Hydroxylgruppen und besonders bevorzugt phenylische Hydroxylgruppen enthält.

Ein Gegenstand der Erfindung ist auch ein Verfahren zur Herstellung eines Polyurethans (N) durch Umsetzung des erfindungsgemäßen Polyurethans (M), bevorzugt des thermoplastischen Polyurethans (M-1) umfassend die Schritte:
A) Optional mechanische Zerkleinerung des Polyurethans (M), bevorzugt des thermoplastischen Polyurethans (M-1),
B) Thermische Behandlung des gegebenenfalls mechanisch zerkleinerten Polyurethans (M), bevorzugt des thermoplastischen Polyurethans (M-1), bei einer Temperatur T(N), optional unter Zugabe eines Katalysators (O) und/oder optional unter Zugabe von Hilfs- und Zusatzstoff (P), wobei bevorzugt gilt: T(N) < T(M).

In einer Ausführungsform der Erfindung ist die Temperatur T(N) niedriger als die Temperatur T(M). In einer Ausführungsform der Erfindung wird die thermische Behandlung bei einer Temperatur T(N) von 80 °C bis 200 °C, bevorzugt von 110 °C bis 180 °C durchgeführt.

In einer Ausführungsform der Erfindung wird die thermische Behandlung bei einem Druck p(N) von 50 bar bis 300 bar, bevorzugt von 80 bar bis 200 bar durchgeführt.

In einer Ausführungsform der Erfindung erfolgt die thermische Behandlung in einer Reaktionszeit t(N) von 0,1 min bis 20 min, bevorzugt von 0,2 min bis 15 min.

In einer Ausführungsform der Erfindung erfolgt die thermische Behandlung des Polyurethans (M), bevorzugt des thermoplastischen Polyurethans (M-1) in einem gleichläufigen Mehrschneckenextruder, wie einem Doppelschnecken- oder einem Vierschneckenextruder oder einem Ringextruder, einem Co-Kneter oder einem Planetenwalzenextruder oder in Rotor-Stator-Systemen. Weitere geeignete Vorrichtungen sind Ein- oder Zweiwellen-Großvolumenkneter. Die großvolumigen Zweiwellenkneter können gleich- oder gegenläufig sein. Beispiele für großvolumige Kneter sind z.B. CRP (von List Technology AG), Reacom (Buss-SMS-Canzler GmbH), Reasil (Buss-SMS-Canzler GmbH), KRC Kneter (Kurimoto, Ltd).

In einer Ausführungsform der Erfindung ist der Katalysator (O) identisch mit dem Katalysator (J-1) wie oben beschrieben. In einer Ausführungsform der Erfindung wird kein weiterer Katalysator (O) im Verfahren zugegeben.

In einer Ausführungsform der Erfindung ist der Hilfs- und Zusatzstoff (P) identisch mit dem Hilfs- und Zusatzstoff (J-2) wie oben beschrieben. In einer Ausführungsform der Erfindung wird kein weiterer Hilfs- und Zusatzstoff (P) im Verfahren zugegeben.

Ein Gegenstand der Erfindung ist auch ein Polyurethan (N) erhältlich nach dem erfindungsgemäßen Verfahren.

In einer Ausführungsform der Erfindung ist das Polyurethan (N) schwefelfrei.

In einer Ausführungsform enthält das Polyurethan (N) aromatische Urethanbindungen, bevorzugt phenylische oder naphthylische Urethanbindungen und besonders bevorzugt phenylische Urethanbindungen, wobei der Anteil der aromatischen Urethanbindungen, bevorzugt der phenylischen oder der naphthylischen Urethanbindungen und besonders bevorzugt der phenylischen Urethanbindungen bezogen auf die Summe aller Urethanbindungen des Polyurethans (N) höher ist als für das Polyurethan (M), bevorzugt das thermoplastische Polyurethan (M-1). Bevorzugt wird der Anteil der aromatischen Urethanbindungen, bevorzugt der phenylischen oder der naphthylischen Urethanbindungen und besonders bevorzugt der phenylischen Urethanbindungen mittels einer IR-Methode bestimmt, wobei der Fachmann aufgrund seines Fachwissens eine geeignete IR-Methode auswählt.

In einer ersten Ausführungsform betrifft die Erfindung eine Hydroxylgruppen-enthaltende Verbindung (A) enthaltend eine an eine aromatische Einheit Ar¹ oder Ar² gebundene Hydroxylgruppe, wobei die Hydroxylgruppen-enthaltende Verbindung (A) mindestens eine, bevorzugt mindestens zwei Struktureinheit(en) der nachfolgenden Formel (I) oder der Formel (II) aufweist:

R¹-O-C(=O)-R²-Ar¹-OH (I)

R³-O-C(=O)-Ar²-OH (II)

worin
- R¹, R³: mindestens eine Oxyalkyleneinheit,
- R²: eine gesättigte Kohlenwasserstoffeinheit mit mindestens einem Kohlenstoffatom oder eine ungesättigte Kohlenwasserstoffeinheit mit mindestens zwei Kohlenstoffatomen,
- Ar¹: eine aromatische Einheit, bevorzugt eine Phenylen- oder eine Naphthylen-Einheit, besonders bevorzugt eine Phenylen-Einheit, und
- Ar²: eine Phenylen-Einheit bezeichnen,
wobei in der Struktureinheit der Formel (I) mindestens eine, bevorzugt jede, zu der aromatischen Hydroxylgruppe ortho-ständige Position der aromatischen Einheit Ar¹ ein Wasserstoffatom trägt, und wobei in der Struktureinheit der Formel (II) die aromatische Hydroxylgruppe in ortho-ständiger Position oder in meta-ständiger Position, bevorzugt in meta-ständiger Position zur R³-O-C(=O)-Einheit steht, wobei bevorzugt eine, insbesondere jede vorhandene, zu der aromatischen Hydroxylgruppe ortho-ständige Position der aromatischen Einheit Ar² ein Wasserstoffatom trägt.

In einer zweiten Ausführungsform betrifft die Erfindung eine Hydroxylgruppen-enthaltende Verbindung (A) gemäß der ersten Ausführungsform, wobei die Hydroxylgruppen-enthaltende Verbindung (A) in R¹ und/oder R³ mindestens eine Ethereinheit, bevorzugt eine Polyethereinheit und besonders bevorzugt mindestens eine Oxypropyleneinheit und/oder mindestens eine Oxyethyleneinheit enthält.

In einer dritten Ausführungsform betrifft die Erfindung eine Hydroxylgruppen-enthaltende Verbindung (A) gemäß der ersten oder zweiten Ausführungsform, wobei die Hydroxylgruppen-enthaltende Verbindung (A) mindestens 3 direkt aufeinander folgende Ethereinheiten, bevorzugt mindestens 3 direkt aufeinander folgende Oxyethylen- und/oder mindestens 3 direkt aufeinander folgende Oxypropyleneinheiten enthält oder die mindestens 3 Oxyalkyleneinheiten Mischungen aus Oxyethylen-und Oxypropyleneinheiten beinhalten.

In einer vierten Ausführungsform betrifft die Erfindung eine Hydroxylgruppen-enthaltende Verbindung (A) gemäß einer der ersten bis dritten Ausführungsform, wobei die Hydroxylgruppen-enthaltende Verbindung (A) höchstens 400 direkt aufeinander folgende Ethereinheiten, bevorzugt höchstens 200 direkt aufeinander folgende Oxyethylen- und/oder höchstens 400 direkt aufeinander folgende Oxypropyleneinheiten enthält.

In einer fünften Ausfuhrungsform betrifft die Erfindung eine Hydroxylgruppen-enthaltende Verbindung (A) gemäß einer der ersten bis vierten Ausführungsform, wobei die OH-Zahl der Hydroxylgruppen-enthaltenden Verbindung (A) von 5 mg KOH/g bis 500 mg KOH/g, besonders bevorzugt von 10 mg KOH/g bis 500 mg KOH/g beträgt.

In einer sechsten Ausführungsform betrifft die Erfindung eine Hydroxylgruppen-enthaltende Verbindung (A) gemäß einer der ersten bis fünften Ausführungsform, wobei der berechnete Anteil der an die aromatische Einheit Ar¹ oder Ar² gebundenen Hydroxylgruppen von 20 mol-% bis 100 mol-%, bevorzugt von 25 mol-% bis 100 mol-%, besonders bevorzugt von 30 mol-% bis 100 mol-%, bezogen auf die Summe aller freien Hydroxylgruppen der Hydroxylgruppen-enthaltenden Verbindung (A) beträgt.

In einer siebten Ausführungsform betrifft die Erfindung ein Verfahren zur Herstellung der erfindungsgemäßen Hydroxylgruppen-enthaltenden Verbindung (A) umfassend die Umsetzung einer Komponente (B) enthaltend eine oder mehrere aliphatische Hydroxylgruppe(n) mit einer Carbonsäure (C) enthaltend eine aromatische Hydroxylgruppe optional in Gegenwart eines Katalysators (D), wobei die Carbonsäure (C) eine Struktur der nachfolgenden Formel (III) oder der Formel (IV) aufweist:

H-O-C(=O)-R²-Ar¹-OH (III)

H-O-C(=O)-Ar²-OH (IV)

worin
- R²: eine gesättigte Kohlenwasserstoffeinheit mit mindestens einem Kohlenstoffatom oder eine ungesättigte Kohlenwasserstoffeinheit mit mindestens zwei Kohlenstoffatomen,
- Ar¹: eine aromatische Einheit, bevorzugt eine Phenylen- oder eine Naphthylen-Einheit, besonders bevorzugt eine Phenylen-Einheit, und
- Ar²: eine Phenylen-Einheit
bezeichnen, wobei in der Struktureinheit der Formel (III) mindestens eine, bevorzugt jede, zu der aromatischen Hydroxylgruppe ortho-ständige Position der aromatischen Einheit Ar¹ ein Wasserstoffatom trägt, und wobei in der Struktureinheit der Formel (IV) die aromatische Hydroxylgruppe in ortho-ständiger Position oder in meta-ständiger Position, bevorzugt in meta-ständiger Position zur R³-O-C(=O)-Einheit steht, wobei bevorzugt eine, insbesondere jede vorhandene, zu der aromatischen Hydroxylgruppe ortho-ständige Position der aromatischen Einheit Ar² ein Wasserstoffatom trägt

In einer achten Ausführungsform betrifft die Erfindung ein Verfahren gemäß der siebten Ausführungsform, wobei die aliphatischen Hydroxylgruppen der Komponente (B) primäre und/oder sekundäre Hydroxylgruppen sind.

In einer neunten Ausführungsform betrifft die Erfindung ein Verfahren gemäß einer der siebten oder achten Ausführungsform, wobei die Komponente (B) erhältlich ist durch Umsetzung einer H-funktionellen Starterverbindung (E) mit einem Alkylenoxid (F) in Gegenwart eines Katalysators (G). In einer zehnten Ausführungsform betrifft die Erfindung ein Verfahren der neunten Ausführungsform, wobei die H-funktionelle Starterverbindung (E) ein Amin und/oder ein Alkohol, bevorzugt ein Alkohol ist.

In einer elften Ausführungsform betrifft die Erfindung ein Verfahren der zehnten Ausführungsform, wobei die H-funktionelle Starterverbindung (E) keine Thiolgruppen enthält.

In einer zwölften Ausführungsform betrifft die Erfindung ein Verfahren einer der neunten bis elften Ausführungsform, wobei die H-funktionelle Starterverbindung (E) aus den Elementen Kohlenstoff, Wasserstoff, Sauerstoff und Stickstoff aufgebaut ist.

In einer dreizehnten Ausführungsform betrifft die Erfindung ein Verfahren gemäß einer der neunten bis zwölften Ausführungsform, wobei die H-funktionelle Starterverbindung (E) ein Alkohol ist, und der Alkohol eine oder mehrere Verbindungen ist und ausgewählt wird aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, ein difunktionelles Polyetherpolyol und ein trifunktionelles Polyetherpolyol.

In einer vierzehnten Ausführungsform betrifft die Erfindung ein Verfahren gemäß einer der neunten bis dreizehnten Ausführungsform, wobei das Alkylenoxid (F) Propylenoxid und/oder Ethylenoxid ist.

In einer fünfzehnten Ausführungsform betrifft die Erfindung ein Verfahren gemäß einer der neunten bis vierzehnten Ausführungsform, wobei als Alkylenoxid (F) ein Gemisch aus Ethylenoxid und Propylenoxid eingesetzt wird, und dieses Gemisch bevorzugt bis zu 75 Massen-% Ethylenoxid, besonders bevorzugt bis zu 50 Massen-% Ethylenoxid und ganz besonders bevorzugt bis zu 30 Massen-% Ethylenoxid, bezogen auf die Gesamtmasse des Gemisches aus Ethylenoxid und Propylenoxid, aufweist.

In einer sechzehnten Ausführungsform betrifft die Erfindung ein Verfahren gemäß einer der neunten bis fünfzehnten Ausführungsform, wobei der Katalysator (G) ein Doppelmetallcyanid (DMC)-Katalysator, ein Alkalimetallhydroxid, ein Erdalkalimetallhydroxid und/oder ein Amin, eine Lewis-Säure oder eine Brønsted-Säure, bevorzugt ein Doppelmetallcyanid (DMC) -Katalysator oder ein Alkalimetallhydroxid ist.

In einer siebzehnten Ausführungsform betrifft die Erfindung ein Verfahren zur Herstellung eines Polyurethans (H), bevorzugt eines Polyurethanschaums (H-1) oder eines kompakten Polyurethans (H-2) durch Umsetzung der Komponenten
(I) enthaltend
   (I-1) die Hydroxylgruppen-enthaltende Verbindung (A) gemäß einer der ersten bis sechsten Ausführungsform oder die Hydroxylgruppen-enthaltende Verbindung (A) erhältlich nach dem Verfahren gemäß einer der siebten bis sechzehnten Ausführungsform,
   (I-2) gegebenenfalls eine Isocyanat-reaktive Komponente
(J) gegebenenfalls
   (J-1) Katalysator, und/oder
   (J-2) Hilfs- und Zusatzstoff
(K) gegebenenfalls
   (K) ein Treibmittel, bevorzugt Wasser,
   mit
(L) einem Polyisocyanat.

In einer achtzehnten Ausführungsform betrifft die Erfindung ein Verfahren gemäß der siebzehnten Ausführungsform, wobei die Isocyanat-reaktive Komponente (I-2) ein Polyoxyalkylenpolyol ein Polyesterpolyol, ein Polycarbonatpolyol, ein Polyethercarbonatpolyol, ein Polyestercarbonatpolyol, ein Polyetherestercarbonatpolyol und/oder ein niedermolekulares Kettenverlängerungs- und/oder Vernetzungsmittel mit OH-Zahlen bzw. NH-Zahlen von 6 bis 1870 mg KOH/g ist.

In einer neunzehnten Ausführungsform betrifft die Erfindung ein Verfahren gemäß der siebzehnten oder achtzehnten Ausführungsform, wobei Wasser als Treibmittel (K) eingesetzt wird unter Bildung des Polyurethanschaums (H-1).

In einer zwanzigsten Ausführungsform betrifft die Erfindung ein Verfahren gemäß einer der siebzehnten bis neunzehnten Ausführungsform, wobei das Polyisocyanat (L) eine oder mehrere Verbindungen ist und ausgewählt wird aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat, bevorzugt 2,4- und 2,6-Toluylendiisocyanat.

In einer einundzwanzigsten Ausführungsform betrifft die Erfindung ein Polyurethan (H), bevorzugt Polyurethanschaum (H-1) oder kompaktes Polyurethan (H-2), erhältlich nach dem Verfahren gemäß einer der siebzehnten bis zwanzigsten Ausführungsform.

In einer zweiundzwanzigsten Ausführungsform betrifft die Erfindung ein Polyurethan (H) gemäß der einundzwanzigsten Ausführungsform, wobei das Polyurethan (H), bevorzugt der Polyurethanschaum (H-1) oder das kompakte Polyurethan (H-2), schwefelfrei ist und der berechnete Anteil der aromatischen Urethanbindungen, bevorzugt der phenylischen oder der naphthylischen Urethanbindungen und besonders bevorzugt der phenylischen Urethanbindungen im Polyurethan (H), bevorzugt im Polyurethanschaum (H-1) oder im kompakten Polyurethan (H-2), von 20 mol-% bis 100 mol-%, bevorzugt von 25 mol-% bis 100 mol-% und besonders bevorzugt von 30 mol-% bis 100 mol-%, bezogen auf die Summe aller Urethanbindungen des Polyurethans (H), bevorzugt des Polyurethanschaums (H-1) oder des kompakten Polyurethans (H-2) beträgt.

In einer dreiundzwanzigsten Ausführungsform betrifft die Erfindung eine Verwendung der Hydroxylgruppen-enthaltenden Verbindung (A) gemäß einer der ersten bis sechsten Ausführungsform oder der Hydroxylgruppen-enthaltenden Verbindung (A) erhältlich nach dem Verfahren gemäß einer der siebten bis sechzehnten Ausführungsform zur Erleichterung der Spaltung von Urethanbindungen in einem Prozess zur Wiederverwertung eines Polyurethans.

In einer vierundzwanzigsten Ausführungsform betrifft die Erfindung ein Verfahren zur Herstellung eines Polyurethans (M) umfassend eine thermische Behandlung oder eine enzymatische Behandlung, bevorzugt eine thermische Behandlung, des Polyurethans (H), bevorzugt des Polyurethanschaums (H-1) oder des kompakten Polyurethans (H-2) gemäß der einundzwanzigsten oder zweiundzwanzigsten Ausführungsform oder erhalten nach den Verfahren gemäß einer der siebzehnten bis zwanzigsten Ausführungsform.

In einer fünfundzwanzigsten Ausführungsform betrifft die Erfindung ein Verfahren gemäß der vierundzwanzigsten Ausführungsform, wobei die thermische Behandlung bei einer Temperatur T(M) von 100 °C bis 220 °C, bevorzugt von 130 °C bis 200 °C durchgeführt wird.

In einer sechsundzwanzigsten Ausführungsform betrifft die Erfindung ein Verfahren gemäß der vierundzwanzigsten oder fünfundzwanzigsten Ausführungsform, wobei die thermische Behandlung bei einem Druck p(M) von 50 bar bis 300 bar, bevorzugt von 80 bar bis 200 bar durchgeführt wird.

In einer siebenundzwanzigsten Ausführungsform betrifft die Erfindung ein Verfahren gemäß einer der vierundzwanzigsten bis sechsundzwanzigsten Ausführungsform, wobei die thermische Behandlung in einer Reaktionszeit t(M) von 0,1 min bis 20 min, bevorzugt von 0,2 min bis 15 min erfolgt.

In einer achtundzwanzigsten Ausführungsform betrifft die Erfindung ein Verfahren gemäß einer der vierundzwanzigsten bis siebenundzwanzigsten Ausführungsform, wobei die thermische Behandlung in einem gleichläufigen Mehrschneckenextruder, wie einem Doppelschnecken- oder einem Vierschneckenextruder oder einem Ringextruder, einem Co-Kneter oder einem Planetenwalzenextruder oder in Rotor-Stator-Systemen erfolgt.

In einer neunundzwanzigsten Ausführungsform betrifft die Erfindung ein Verfahren gemäß einer der vierundzwanzigsten bis achtundzwanzigsten Ausführungsform, wobei das Polyurethan (M) ein thermoplastisches Polyurethan (M-1) ist.

In einer dreißigsten Ausführungsform betrifft die Erfindung ein Polyurethan (M), bevorzugt ein thermoplastisches Polyurethan (M-1) erhältlich nach dem Verfahren gemäß einer der vierundzwanzigsten bis neunundzwanzigsten Ausführungsform.

In einer einunddreißigsten Ausführungsform betrifft die Erfindung ein Polyurethan (M), bevorzugt ein thermoplastisches Polyurethan (M-1) gemäß der dreißigsten Ausführungsform, wobei das Polyurethan (M), bevorzugt das thermoplastische Polyurethan (M-1), schwefelfrei ist.

In einer zweiunddreißigsten Ausführungsform betrifft die Erfindung ein Polyurethan (M), bevorzugt ein thermoplastisches Polyurethan (M-1) gemäß der dreißigsten oder einunddreißigsten Ausführungsform, wobei das Polyurethan (M), bevorzugt das thermoplastische Polyurethan (M-1) keine aromatischen Urethanbindungen, bevorzugt keine phenylischen oder keine naphthylischen Urethanbindungen und besonders bevorzugt keine phenylischen Urethanbindungen enthält.

In einer dreiunddreißigsten Ausführungsform betrifft die Erfindung ein Polyurethan (M), bevorzugt ein thermoplastisches Polyurethan (M-1) gemäß der dreißigsten oder einunddreißigsten Ausführungsform, wobei das Polyurethan (M), bevorzugt das thermoplastische Polyurethan (M-1) aromatische Hydroxylgruppen, bevorzugt phenylische oder naphthylische Hydroxylgruppen und besonders bevorzugt phenylische Hydroxylgruppen enthält, wobei der Anteil der aromatischen Urethanbindungen, bevorzugt der phenylischen oder der naphthylischen Urethanbindungen und besonders bevorzugt der phenylischen Urethanbindungen, bezogen auf die Summe aller Urethanbindungen des Polyurethans (M), bevorzugt des thermoplastischen Polyurethans (M-1) geringer ist als für das Polyurethan (H), bevorzugt den Polyurethanschaum (H-1) oder das kompakte Polyurethan (H-2).

In einer vierunddreißigsten Ausführungsform betrifft die Erfindung ein Polyurethan (M), bevorzugt das thermoplastische Polyurethan (M-1) gemäß der zweiunddreißigsten oder dreiunddreißigsten Ausführungsform, wobei das Polyurethan (M), bevorzugt das thermoplastische Polyurethan (M-1) aromatische Hydroxylgruppen, bevorzugt phenylische oder naphthylische Hydroxylgruppen und besonders bevorzugt phenylische Hydroxylgruppen enthält.

In einer fünfunddreißigsten Ausführungsform betrifft die Erfindung ein Verfahren zur Herstellung eines Polyurethans (N) durch Umsetzung des Polyurethans (M), bevorzugt des thermoplastischen Polyurethans (M-1) gemäß einer der dreißigsten bis vierunddreißigsten Ausführungsform umfassend die Schritte:
A) Optional mechanische Zerkleinerung des Polyurethans (M), bevorzugt des thermoplastischen Polyurethans (M-1),
B) Thermische Behandlung des Polyurethans (M), bevorzugt des thermoplastischen Polyurethans (M-1) bei einer Temperatur T(N) optional unter Zugabe eines Katalysators (O) und/oder optional unter Zugabe von Hilfs- und Zusatzstoff (P), wobei bevorzugt gilt: T(N) < T(M).

In einer sechsunddreißigsten Ausführungsform betrifft die Erfindung ein Verfahren gemäß der fünfunddreißigsten Ausführungsform, wobei die Temperatur T(N) niedriger als die Temperatur T(M) ist.

In einer siebenunddreißigsten Ausführungsform betrifft die Erfindung ein Verfahren gemäß der fünfunddreißigsten oder sechsunddreißigsten Ausführungsform, wobei die thermische Behandlung bei einer Temperatur T(N) von 80 °C bis 200 °C, bevorzugt von 110 °C bis 180 °C durchgeführt wird.

In einer achtunddreißigsten Ausführungsform betrifft die Erfindung ein Verfahren gemäß einer der fünfunddreißigsten bis siebenunddreißigsten Ausführungsform, wobei die thermische Behandlung bei einem Druck p(N) von 50 bar bis 300 bar, bevorzugt von 80 bar bis 200 bar durchgeführt wird.

In einer neununddreißigsten Ausführungsform betrifft die Erfindung ein Verfahren gemäß einer der fünfunddreißigsten bis achtunddreißigsten Ausführungsform, wobei die thermische Behandlung in einer Reaktionszeit t(N) von 0,1 min bis 20 min, bevorzugt von 0,2 min bis 15 min erfolgt.

In einer vierzigsten Ausführungsform betrifft die Erfindung ein Verfahren gemäß einer der fünfunddreißigsten bis neununddreißigsten Ausführungsform, wobei die thermische Behandlung in einem gleichläufigen Mehrschneckenextruder, wie einem Doppelschnecken- oder einem Vierschneckenextruder oder einem Ringextruder, einem Co-Kneter oder einem Planetenwalzenextruder oder in Rotor-Stator-Systemen erfolgt.

In einer einundvierzigsten Ausführungsform betrifft die Erfindung ein Polyurethan (N) erhältlich nach dem Verfahren gemäß einer der fünfunddreißigsten bis vierzigsten Ausführungsform.

In einer zweiundvierzigsten Ausführungsform betrifft die Erfindung ein Polyurethan (N) gemäß der einundvierzigsten Ausführungsform, wobei das Polyurethan (N) aromatische Urethanbindungen, bevorzugt phenylische oder naphthylische Urethanbindungen und besonders bevorzugt phenylische Urethanbindungen enthält, wobei der Anteil der aromatischen Urethanbindungen, bevorzugt der phenylischen oder der naphthylischen Urethanbindungen und besonders bevorzugt der phenylischen Urethanbindungen bezogen auf die Summe aller Urethanbindungen des Polyurethans (N) höher ist als für das Polyurethan (M), bevorzugt das thermoplastische Polyurethan (M-1).

### Beispiele

### Methoden

**OH-Zahl:** Die Bestimmung der OH-Zahlen (Hydroxylzahlen) erfolgte gemäß der Vorschrift der DIN 4629-2 (Dezember 2016).

**Viskosität:** Die Viskositäten wurden mittels Rotationsviskosimeter (Physica MCR 72, Hersteller: Anton Paar) nach der Vorschrift DIN 53019-1 (September 2008) ermittelt.

**Säurezahl:** Die Bestimmung der Säurezahlen erfolgte gemäß der Vorschrift der DIN EN ISO 2114 (November 2006).

**NMR:** Die (¹H- und ¹³C-)NMR Spektren wurden gemäß der DIN EN ISO/IEC 17025 auf einem Bruker AVIII HD 600 NMR Spektrometer aufgenommen. Als Lösungsmittel diente CDCl₃.

**Dynamisch Mechanische Analyse (DMA):** Die DMA-Messungen wurden auf einem Anton Paar MCR 702e space mit dem Konvektionsofen CTD600 gemacht. Alle Experimente wurden unter Stickstoffatmosphäre und Kompression durchgeführt, mit einer Dehnungsamplitude von 0,5 % und einer konstanten Kraft von 1 oder 2 N bei einer Frequenz von 1 Hz. Es wurde an zylindrischen Proben mit einem Durchmesser von 16 mm und einer Höhe von 9 mm gemessen. Für jede Probe wurden zwei verschiedene Arten von Experimenten mit unterschiedlichen Temperaturprofilen durchgeführt:
1) Kontinuierliches Aufheizen bis auf maximal 250 °C mit einer Aufheizrate von 2 K/min. Die Messungen wurden früher unterbrochen, wenn die Deformationsgrenze des Messgeräts bereits unter 250 °C erreicht wurde.
2) Temperaturhysterese mit einer Aufheizrate von 2 K/min bis zu einer maximalen Temperatur (T_{H}) im Bereich der mittels Experiment 1) bestimmten Erweichungstemperatur. Die Temperatur T_{H} wurde 5 min lang gehalten, anschließend wurde die Probe wieder auf eine niedrigere Temperatur T_{L} abgekühlt und dort 5 min lang gehalten, bevor die Probe wieder auf T_{H} erwärmt und anschließend auf die Anfangstemperatur abgekühlt wurde. Diese Zyklen wurden bei stabilen Proben einige Male wiederholt.

Mittels Experiment nach Temperaturprofil 1) wurde die Erweichungstemperatur der Polyurethane (H) ermittelt aus dem Schnittpunkt der Tangente an die verlängerte Basislinie und der Tangente am steilsten Punkt des Abfalls des Dehnspeichermoduls.

Mittels Experiment nach Temperaturprofil 2) lassen sich Aussagen zur Recyclierbarkeit machen.

### A: Herstellung der Verbindungen (A) enthaltend aromatische Hydroxylgruppen:

### Eingesetzte Rohstoffe:

### Komponente (B):

Arcol^{®} Polyol 1104: Trifunktionelles Polyetherpolyol auf Basis Glycerin mit OH-Zahl 55,5 mg KOH/g erhalten durch Polymerisation mit 100 Gew.% Propylenoxid.
Arcol^{®} Polyol 1108: Trifunktionelles Polyetherpolyol auf Basis Glycerin mit OH-Zahl 48 mg KOH/g erhalten durch Copolymerisation von 12 Gew.% Ethylenoxid mit 88 Gew.% Propylenoxid.
Arcol^{®} Polyol 1004: Bifunktionelles Polyetherpolyol auf Basis Propylenglykol mit OH-Zahl 260 mg KOH/g erhalten durch Polymerisation mit 100 Gew.% Propylenoxid.
Desmophen 1110 BD: Bifunktionelles Polyetherpolyol auf Basis Propylenglykol mit OH-Zahl 112 mg KOH/g erhalten durch Polymerisation mit 100 Gew.% Propylenoxid.

### Komponente (C):

4-Hydroxyphenylessigsäure: 98%, Sigma-Aldrich.
3-Hydroxybenzoesäure: Reagent Plus^{®}, 99%, Sigma-Aldrich.

### Katalysator (D):

p-Toluolsulfonsäure Monohydrat: Reagent Plus^{®}, ≥98%, Sigma-Aldrich.

### Für Vergleichsbeispiel:

4-Hydroxybenzoesäure: 99 %, Thermo Scientific Chemicals.

### Beispiel 1

In einem 1 L Dreihalskolben, ausgestattet mit KPG-Rührer, Wasserabscheider und Thermofühler, wurden 500 g Arcol^{®} Polyol 1104 (Komponente (B)), 37,6 g 4-Hydroxyphenylessigsäure (Komponente (C)) und 3000 ppm p-Toluolsulfonsäure (Katalysator (D)) in 150 mL Toluol gelöst. Die Reaktionsmischung wurde so lange zum Rückfluss erhitzt, bis die berechnete Wassermenge (4,4 mL) destilliert wurde, was einem 50%igen Umsatz der aliphatischen OH-Gruppen von Arcol^{®} Polyol 1104 unter Veresterung mit 4-Hydroxyphenylessigsäure entspricht. Nach Entfernen des Lösungsmittels wurde eine Säurezahl von 1,00 mg KOH/g gemessen und das Polyol (Verbindung (A)) nicht weiter aufgearbeitet.

Das erhaltene Produkt (Verbindung (A)) hat eine OH-Zahl von 52,3 mg KOH/g.

Im ¹H-NMR-Spektrum von Verbindung (A) wird das CH-Signal der freien sekundären OH-Gruppe bei 3,92 ppm und das veresterte CH-Signal der sekundären OH-Gruppe bei 5,01 ppm detektiert. Das Molverhältnis dieser beiden Signale, normiert auf 3, ergibt:
CH-OH 1,56
CH verestert 1,44.

### Beispiel 2

In einem 1 L Dreihalskolben, ausgestattet mit KPG-Rührer, Wasserabscheider und Thermofühler, wurden 300 g Arcol^{®} Polyol 1104 (Komponente (B)), 20,5 g 3-Hydroxybenzoesäure (Komponente (C)) und 10.000 ppm p-Toluolsulfonsäure (Katalysator (D)) in 350 mL Xylol gelöst. Die Reaktionsmischung wurde so lange zum Rückfluss erhitzt, bis kein Wasser mehr entstanden ist (0,8 mL), was einem 33%igen Umsatz der aliphatischen OH-Gruppen von Arcol^{®} Polyol 1104 unter Veresterung mit 3-Hydroxybenzoesäure entspricht. Die Reaktionszeit betrug 14 h. Auch bei Verlängerung der Reaktionszeit konnte kein höherer Umsatz als 66% der 3-Hydroxybenzoesäure erreicht werden. Der Katalysator (p-Toluolsulfonsäure) und die nicht reagierte 3-Hydroxybenzoesäure wurden durch Auswaschen mit einer gesättigten Natriumchloridlösung (75 mL) aus der organischen Phase entfernt und abschließend das Lösungsmittel Xylol abdestilliert.

Das erhaltene Produkt (Verbindung (A)) hat eine OH-Zahl von 57,3 mg KOH/g.

Im ¹H-NMR-Spektrum von Verbindung (A) wird das CH-Signal der freien sekundären OH-Gruppe bei 3,92 ppm und das veresterte CH-Signal der sekundären OH-Gruppe bei 5,25 ppm detektiert. Das Molverhältnis dieser beiden Signale, normiert auf 3, ergibt:
CH-OH 2,01
CH verestert 0,99.

### Beispiel 3 (Vergleichsbeispiel)

In einem 1 L Dreihalskolben, ausgestattet mit KPG-Rührer, Wasserabscheider und Thermofühler, wurden 300 g Arcol^{®} Polyol 1104 (Komponente (B)), 20,5 g 4-Hydroxybenzoesäure und 10.000 ppm p-Toluolsulfonsäure (Katalysator (D)) in 350 mL Xylol gelöst. Die Reaktionsmischung wurde so lange zum Rückfluss erhitzt, bis kein Wasser mehr entstanden ist (0,5 mL), was einem 19%igen Umsatz der aliphatischen OH-Gruppen von Arcol^{®} Polyol 1104 unter Veresterung mit 4-Hydroxybenzoesäure entspricht. Die Reaktionszeit betrug 14 h. Auch bei Verlängerung der Reaktionszeit konnte kein höherer Umsatz als 38% der 4-Hydroxybenzoesäure erreicht werden. Der Katalysator (p-Toluolsulfonsäure) und die nicht reagierte 4-Hydroxybenzoesäure wurden durch Auswaschen mit einer gesättigten Natriumchloridlösung (75 mL) aus der organischen Phase entfernt und abschließend das Lösungsmittel Xylol abdestilliert.

Das erhaltene Produkt hat eine OH-Zahl von 52,0 mg KOH/g.

Im ¹H-NMR-Spektrum wird das CH-Signal der freien sekundären OH-Gruppe bei 3,92 ppm und das veresterte CH-Signal der sekundären OH-Gruppe bei 5,20 ppm detektiert. Das Molverhältnis dieser beiden Signale, normiert auf 3, ergibt:
CH-OH 2,43
CH verestert 0,57.

### Bespiel 4

In einem 2 L Dreihalskolben, ausgestattet mit KPG-Rührer, Wasserabscheider und Thermofühler, wurden 1000 g Arcol^{®} Polyol 1108 (Komponente (B)), 64,6 g 4-Hydroxyphenylessigsäure (Komponente (C)) und 5000 ppm p-Toluolsulfonsäure (Katalysator (D)) in 600 mL Toluol gelöst. Die Reaktionsmischung wurde so lange zum Rückfluss erhitzt, bis die berechnete Wassermenge (7,7 mL) destilliert wurde, was einem 50%igen Umsatz der aliphatischen OH-Gruppen von Arcol^{®} Polyol 1108 unter Veresterung mit 4-Hydroxyphenylessigsäure entspricht. Nach Entfernen des Lösungsmittels wurde eine Säurezahl von 2,23 mg KOH/g gemessen, das Polyol (Verbindung (A)) mit einer stöchiometrischen Menge KOH (wässrige Lösung) neutralisiert und das entstandene Salz abfiltriert.

Das erhaltene Produkt (Verbindung (A)) hat eine OH-Zahl von 48,9 mg KOH/g.

### Beispiel 5

In einem 2 L Dreihalskolben, ausgestattet mit KPG-Rührer, Wasserabscheider und Thermofühler, wurden 1000 g Desmophen 1110 BD (Komponente (B)), 303,8 g 4-Hydroxyphenylessigsäure (Komponente (C)) und 3000 ppm p-Toluolsulfonsäure (Katalysator (D)) in 500 mL Toluol gelöst. Die Reaktionsmischung wurde so lange zum Rückfluss erhitzt, bis die berechnete Wassermenge (35,9 mL) destilliert wurde, was einem 100%igen Umsatz der aliphatischen OH-Gruppen von Desmophen 1110 BD unter Veresterung mit 4-Hydroxyphenylessigsäure entspricht. Nach Entfernen des Lösungsmittels wurde eine Säurezahl von 4,23 mg KOH/g gemessen, das Polyol (Verbindung (A)) mit einer stöchiometrischen Menge KOH (wässrige Lösung) neutralisiert und das entstandene Salz abfiltriert.

Das erhaltene Produkt (Verbindung (A)) hat eine OH-Zahl von 97,5 mg KOH/g.

### Beispiel 6

In einem 1 L Dreihalskolben, ausgestattet mit KPG-Rührer, Wasserabscheider und Thermofühler, wurden 400 g Arcol^{®} Polyol 1004 (Komponente (B)), 128 g 3-Hydroxybenzoesäure (Komponente (C)) und 10000 ppm p-Toluolsulfonsäure (Katalysator (D)) in 450 mL Xylol gelöst. Die Reaktionsmischung wurde so lange zum Rückfluss erhitzt, bis die berechnete Wassermenge (16,7 mL) destilliert wurde, was einem 50%igen Umsatz der aliphatischen OH-Gruppen von Arcol^{®} Polyol 1004 unter Veresterung mit 3-Hydroxybenzoesäure entspricht. Nach Entfernen des Lösungsmittels wurde eine Säurezahl von 5,88 mg KOH/g gemessen, das Polyol (Verbindung (A)) mit einer stöchiometrischen Menge KOH (wässrige Lösung) neutralisiert und das entstandene Salz abfiltriert.

Das erhaltene Produkt (Verbindung (A)) hat eine OH-Zahl von 212,4 mg KOH/g.

### B-1: Herstellung von Polyurethanschäumen (H-1)

### Eingesetzte Rohstoffe

Polyol (I-1): Synthetisierte Polyetherpolyole (Verbindungen (A)) aus A
Polyisocyanat (L): Desmodur T80: Diisocyanat bestehend aus 80% 2,4-TDI und 20% 2,6-TDI
Katalysator (J-1): Desmorapid SO: Zinnoctoat Katalysator
Katalysator (J-1): NIAX A1 Katalysator: Bis(2-Diemethylaminoethyl)ether
Hilfs- und Zusatzstoff (J-2): Tegostab BF 2370

### Allgemeines Vorgehen:

In einem 900 mL Pappbecher wurden 200 g Polyol (Komponente (I-1)) mit insgesamt 0,25 Gew.% Katalysator (J-1), 0,8 Gew.% Stabilisator (J-2) sowie 3,35 Gew.% chemisches Treibmittel (K), hier: Wasser, für 25 Sekunden mittels Pendraulikrührer bei ca. 2000 U/min vorvermischt. Anschließend wurden 89 g Polyisocyanat (L) (abhängig von der OH-Zahl des Polyols) zugegeben und für 7 Sekunden mittels Pendraulikrührer bei ca. 2000 U/min vermischt. Das Reaktionsgemisch wurde dann sofort in eine mit Papier ausgekleidete Holzform gegeben und nach Ende der Steigzeit für 10 Minuten bei 90-100 °C im Heizschrank ausreagiert.

Die Rezepturen zur Herstellung der Polyurethanschäume (H-1) sind in Tabelle 1 zusammengefasst.

**Tabelle 1:**

| Polyurethan (H-1) | Polyol (je 200 g) (I-1) | Desmodur T80 (L) [g] | Desmorapid SO (J-1) [g] | NIAX A1 (J-1) [g] | Tegostab BF 2370 (J-2) [g] | Wasser (K) [g] |
|---|---|---|---|---|---|---|
| H-1/A (Vergleichsbeispiel) | Arcol^{®} 1108 (Vergleichsbeispiel) | 89,14 | 0,30 | 0,20 | 1,60 | 7,00 |
| H-1/B | Beispiel 4 | 89,14 | 0,30 | 0,20 | 1,60 | 7,00 |

Bei allen Versuchen (H-1)/A-B wurden Polyurethanweichschäume mit gleichmäßiger Zellstruktur erhalten.

### B-2: Herstellung von kompakten Polyurethanen (H-2)

### Eingesetzte Rohstoffe

Polyol (I-1): Synthetisierte Polyetherpolyole (Verbindungen (A)) aus A
Polyisocyanat (L): Desmodur T80: Diisocyanat bestehend aus 80% 2,4-TDI und 20% 2,6-TDI
Katalysator (J-1): Desmorapid SO: Zinnoctoat Katalysator

### Allgemeines Vorgehen:

In einem 200 mL Becher wurden 100 g Polyol (Komponente (I-1)) mit 0,5-1,0 Gew.% Katalysator (J-1) in einem Speedmixer für 30 Sekunden bei 2500 U/min vorvermischt. Anschließend wurden 7,1-8,4 g Polyisocyanat (L) (abhängig von der OH-Zahl des Polyols) zugegeben und weitere 30 Sekunden bei 2500 U/min im Speedmixer vermischt. Das Reaktionsgemisch wurde daraufhin in eine Aluminiumform überführt und bei 70°C für 15-30 min ausreagiert.

Die Rezepturen zur Herstellung der kompakten Polyurethane (H-2) sind in Tabelle 2 zusammengefasst.

**Tabelle 2:**

| Polyurethan (H-2) | Polyol (je 100 g) (I-1) | Desmodur T80 (L) [g] | Desmorapid SO (J-1) [g] | Erweichungstemperatur [°C] |
|---|---|---|---|---|
| H-2/A (Vergleichsbeispiel) | Arcol^{®} 1104 (Vergleichsbeispiel) | 8,35 | 0,50 | 220 |
| H-2/B (Vergleichsbeispiel) | Arcol^{®} 1108 (Vergleichsbeispiel) | 7,10 | 0,50 | 201 |
| H-2/C | Beispiel 2 | 8,44 | 0,50 | 94 |
| H-2/D | Beispiel 4 | 7,20 | 1,00 | 93 |

Die dabei erhaltenen kompakten Polyurethane (H-2) wurden mittels Dynamisch Mechanischer Analyse (DMA) untersucht. Die dabei ermittelten Erweichungstemperaturen sind in Tabelle 2 eingetragen.

Die Ergebnisse zeigen, dass die erfindungsgemäßen Polyurethanwerkstoffe (H-2/C-D) niedrigere Erweichungstemperaturen besitzen als die Polyurethanwerkstoffe (H-2/A-B, Vergleich).

Insbesondere zeigt sich, dass das erfindungsgemäße Polyurethan (H-2/C), das bei Verwendung des Polyols (I-1) aus Beispiel 2 erhalten wurde, eine deutlich niedrigere Erweichungstemperatur (94°C) besitzt als das entsprechende Polyurethan (H-2/A) (Vergleich), das bei Verwendung von Arcol^{®} 1104 erhalten wurde (Erweichungstemperatur 220°C).

In gleicher Weise zeigt sich, dass das erfindungsgemäße Polyurethan (H-2/D), das bei Verwendung des Polyols (I-1) aus Beispiel 4 erhalten wurde, eine deutlich niedrigere Erweichungstemperatur (93°C) besitzt als das entsprechende Polyurethan (H-2/B) (Vergleich), das bei Verwendung von Arcol^{®} 1108 erhalten wurde (Erweichungstemperatur 201°C).

### C: Herstellung der Polyurethane (M) durch thermische Behandlung der Polyurethanschäume (H-1)

Die Extrusionsversuche wurden in einem Micro-Compounder MC 15 HAT (Xplore Instruments BV, The Netherlands) durchgeführt. Es wurden Versuche bei verschiedenen Temperaturen (180, 200, 220°C) gefahren, um die besten Temperaturbedingungen zur Herstellung eines kompakten und kontinuierlichen Extrudat-Strangs zu erhalten. Innerhalb jedes Experiments wurde die Temperatur konstant gehalten.

Alle Versuche wurden entsprechend folgender Vorschrift durchgeführt: Das Gerät wurde aufgeheizt und bei der gewünschten Temperatur mindestens 30 min lang gehalten, um mögliche Schwankungen auszuschließen. Anschließend wurde die Schneckengeschwindigkeit des Extruders auf konstant 100 rpm eingestellt und das Material in Form von Flocken hineingegeben. Dieser Vorgang dauerte, abhängig von Schaum und Temperatur, bis zu 2 min. Das Material wurde nach vollständiger Befüllung noch 10 min lang in dem Extruder gehalten, bevor es abgelassen wurde. Die Qualität des Polyurethans wurde anhand des Aussehens und der Beständigkeit des entstandenen Strangs sowie der Einfachheit der Entladung beurteilt.

### Beispiel C-1 (Erfindungsgemäß)

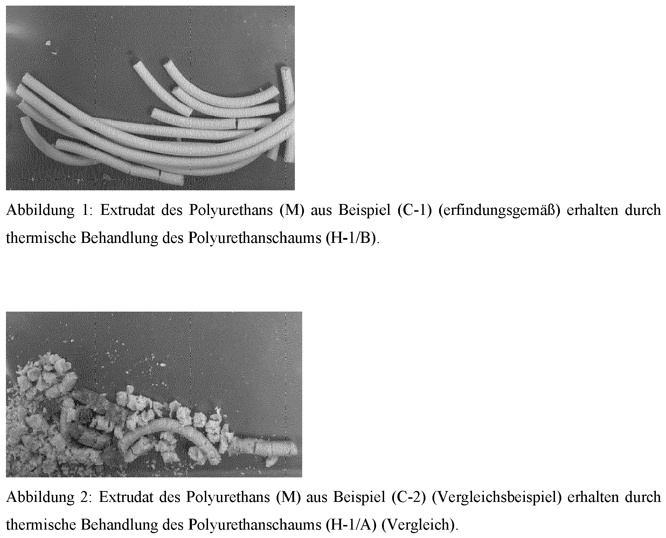

Der Weichschaum aus Versuch (H-1/B) ergab unter diesen Bedingungen einen kompakten und kontinuierlichen Extrudat-Strang ohne Farbänderung (siehe Abbildung 1).

### Beispiel C-2 (Vergleichsbeispiel)

Der Weichschaum aus Versuch (H-1/A) (Vergleich) ergab unter diesen Bedingungen keinen kontinuierlichen Extrudat-Strang, sondern nur pulverförmige Bruchstücke (siehe Abbildung 2).

## Patentansprüche

1. Hydroxylgruppen-enthaltende Verbindung (A) enthaltend eine an eine aromatische Einheit Ar¹ oder Ar² gebundene Hydroxylgruppe,
wobei die Hydroxylgruppen-enthaltende Verbindung (A) mindestens eine, bevorzugt mindestens zwei Struktureinheit(en) der nachfolgenden Formel (I) oder der Formel (II) aufweist:
R¹-O-C(=O)-R²-Ar¹-OH (I)
R³-O-C(=O)-Ar²-OH (II)
worin
R¹, R³ mindestens eine Oxyalkyleneinheit,
R² eine gesättigte Kohlenwasserstoffeinheit mit mindestens einem Kohlenstoffatom oder eine ungesättigte Kohlenwasserstoffeinheit mit mindestens zwei Kohlenstoffatomen,
Ar¹ eine aromatische Einheit, bevorzugt eine Phenylen- oder eine Naphthylen-Einheit, besonders bevorzugt eine Phenylen-Einheit, und
Ar² eine Phenylen-Einheit
bezeichnen,
wobei in der Struktureinheit der Formel (I) mindestens eine, bevorzugt jede, zu der aromatischen Hydroxylgruppe ortho-ständige Position der aromatischen Einheit Ar¹ ein Wasserstoffatom trägt, und
wobei in der Struktureinheit der Formel (II) die aromatische Hydroxylgruppe in ortho-ständiger Position oder in meta-ständiger Position, bevorzugt in meta-ständiger Position zur R³-O-C(=O)-Einheit steht, wobei bevorzugt eine, insbesondere jede vorhandene, zu der aromatischen Hydroxylgruppe ortho-ständige Position der aromatischen Einheit Ar² ein Wasserstoffatom trägt.

2. Hydroxylgruppen-enthaltende Verbindung (A) gemäß Anspruch 1, worin
R¹, R³ mindestens eine Ethereinheit, bevorzugt eine Polyethereinheit, besonders bevorzugt mindestens eine Oxypropyleneinheit und/oder mindestens eine Oxyethyleneinheit,
R² CH₂ oder CH₂-CH₂, bevorzugt CH₂, und
Ar¹, Ar² eine substituierte oder unsubstituierte Phenyleinheit, bevorzugt eine unsubstituierte Phenyleinheit,
bezeichnen.

3. Hydroxylgruppen-enthaltende Verbindung (A) gemäß Anspruch 1 oder 2, wobei der berechnete Anteil der an die aromatische Einheit Ar¹ oder Ar² gebundenen Hydroxylgruppen von 20 mol-% bis 100 mol-%, bevorzugt von 25 mol-% bis 100 mol-%, besonders bevorzugt von 30 mol-% bis 100 mol-%, bezogen auf die Summe aller freien Hydroxylgruppen der Hydroxylgruppen-enthaltenden Verbindung (A) beträgt.

4. Verfahren zur Herstellung einer Hydroxylgruppen-enthaltenden Verbindung (A), bevorzugt der Hydroxylgruppen-enthaltenden Verbindung (A) gemäß einem der Ansprüche 1 bis 3, umfassend die Umsetzung einer Komponente (B) enthaltend eine oder mehrere aliphatische Hydroxylgruppe(n) mit einer Carbonsäure (C) enthaltend eine aromatische Hydroxylgruppe optional in Gegenwart eines Katalysators (D), wobei die Carbonsäure (C) eine Struktur der nachfolgenden Formel (III) oder der Formel (IV) aufweist:
H-O-C(=O)-R²-Ar¹-OH (III)
H-O-C(=O)-Ar²-OH (IV)
worin
R² eine gesättigte Kohlenwasserstoffeinheit mit mindestens einem Kohlenstoffatom oder eine ungesättigte Kohlenwasserstoffeinheit mit mindestens zwei Kohlenstoffatomen,
Ar¹ eine aromatische Einheit, bevorzugt eine Phenylen- oder eine Naphthylen-Einheit, besonders bevorzugt eine Phenylen-Einheit, und
Ar² eine Phenylen-Einheit
bezeichnen,
wobei in der Struktureinheit der Formel (III) mindestens eine, bevorzugt jede, zu der aromatischen Hydroxylgruppe ortho-ständige Position der aromatischen Einheit Ar¹ ein Wasserstoffatom trägt,
und
wobei in der Struktureinheit der Formel (IV) die aromatische Hydroxylgruppe in ortho-ständiger Position oder in meta-ständiger Position, bevorzugt in meta-ständiger Position zur R³-O-C(=O)-Einheit steht, wobei bevorzugt eine, insbesondere jede vorhandene, zu der aromatischen Hydroxylgruppe ortho-ständige Position der aromatischen Einheit Ar² ein Wasserstoffatom trägt.

5. Verfahren gemäß Anspruch 4, wobei die Carbonsäure (C) ausgewählt ist aus 4-Hydroxyphenylessigsäure, 3-Hydroxybenzoesäure, 4-Hydroxyzimtsäure, 3-(4-Hydroxyphenyl)propionsäure oder einer Mischung aus zwei oder mehr der vorgenannten Carbonsäuren, wobei 4-Hydroxyphenylessigsäure, 3-Hydroxybenzoesäure oder ein Gemisch beider bevorzugt und wobei 4-Hydroxyphenylessigsäure besonders bevorzugt ist.

6. Verfahren gemäß Anspruch 4 oder 5, wobei die Komponente (B) erhältlich ist durch Umsetzung einer H-funktionellen Starterverbindung (E) mit einem Alkylenoxid (F) in Gegenwart eines Katalysators (G).

7. Verfahren gemäß Anspruch 6, wobei die H-funktionelle Starterverbindung (E) ein Amin und/oder ein Alkohol, bevorzugt ein Alkohol ist.

8. Verfahren zur Herstellung eines Polyurethans (H), bevorzugt eines Polyurethanschaums (H-1) oder eines kompakten Polyurethans (H-2) durch Umsetzung der Komponenten
(I) enthaltend
(I-1) die Hydroxylgruppen-enthaltende Verbindung (A) gemäß einem der Ansprüche 1 bis 3 oder die Hydroxylgruppen-enthaltende Verbindung (A) erhältlich nach dem Verfahren gemäß einem der Ansprüche 4 bis 7,
(I-2) gegebenenfalls eine von (I-1) verschiedene, weitere Isocyanat-reaktive Komponente, gegebenenfalls (J) enthaltend
(J-1) Katalysator, und/oder
(J-2) Hilfs- und Zusatzstoff,
gegebenenfalls (K) enthaltend
(K) ein Treibmittel, bevorzugt Wasser,
mit
(L) einem Polyisocyanat.

9. Polyurethan (H), bevorzugt Polyurethanschaum (H-1) oder kompaktes Polyurethan (H-2), erhältlich nach dem Verfahren gemäß Anspruch 8.

10. Verwendung der Hydroxylgruppen-enthaltenden Verbindung (A) gemäß einem der Ansprüche 1 bis 3 oder der Hydroxylgruppen-enthaltenden Verbindung (A) erhältlich nach dem Verfahren gemäß einem der Ansprüche 4 bis 7 zur Erleichterung der Spaltung von Urethanbindungen in einem Prozess zur Wiederverwertung eines Polyurethans.

11. Verfahren zur Herstellung eines Polyurethans (M), bevorzugt eines thermoplastischen Polyurethans (M-1), umfassend eine thermische Behandlung oder eine enzymatische Behandlung, bevorzugt eine thermische Behandlung, des Polyurethans (H), bevorzugt des Polyurethanschaums (H-1) oder des kompakten Polyurethans (H-2) gemäß Anspruch 9 oder erhalten nach dem Verfahren gemäß Anspruch 8.

12. Verfahren gemäß Anspruch 11, wobei die thermische Behandlung bei einer Temperatur T(M) von 100 °C bis 220 °C durchgeführt wird.

13. Polyurethan (M), bevorzugt ein thermoplastisches Polyurethan (M-1) erhältlich nach dem Verfahren gemäß Anspruch 11 oder 12.

14. Verfahren zur Herstellung eines Polyurethans (N) durch Umsetzung des Polyurethans (M), bevorzugt des thermoplastischen Polyurethans (M-1) gemäß Anspruch 13 umfassend die Schritte:
A) Optional, mechanische Zerkleinerung des Polyurethans (M), bevorzugt des thermoplastischen Polyurethans (M-1),
B) Thermische Behandlung des gegebenenfalls mechanisch zerkleinerten Polyurethans (M), bevorzugt des thermoplastischen Polyurethans (M-1), bei einer Temperatur T(N), optional unter Zugabe eines Katalysators (O) und/oder optional unter Zugabe von Hilfs- und Zusatzstoff (P), wobei bevorzugt gilt: T(N) < T(M).

15. Polyurethan (N) erhältlich nach dem Verfahren gemäß Anspruch 14.
